# EUROPEAN PATENT SPECIFICATION

(11) **EP 3 532 549 B1**
(45) Date of publication and mention of the grant of the patent: **09.03.2022**
(21) Application number: 17865911.6
(22) Date of filing: 27.10.2017
(51) Int. Cl.: C09D 11/30, C09D 11/02, C09D 11/10, C09D 11/101, C08J 3/28, C08F 2/46, B41J 2/01, B41J 2/435, B41J 11/00, C09D 4/00

(54) **NEW DESIGN OF AN INKJET PRINTING PRESS USING CURABLE WATER-BASED PRIMERS, COATINGS AND INKS**
NEUES DESIGN EINER TINTENSTRAHLDRUCKPRESSE MIT VERWENDUNG HÄRTBARER WASSERBASIERTER PRIMER, BESCHICHTUNGEN UND TINTEN
NOUVELLE CONCEPTION D'UNE PRESSE D'IMPRESSION À JET D'ENCRE UTILISANT DES APPRÊTS, DES REVÊTEMENTS ET DES ENCRES DURCISSABLES À BASE D'EAU

(30) Priority: 27.10.2016 AU 2016904383
(43) Date of publication of application: 04.09.2019
(73) Proprietor: Filsen Pty Ltd, Edgecliff, NSW 2027 (AU)
(72) Inventor: JARRETT, Kevin George, Casula New South Wales 2170 (AU); WILSON, Ian Joseph, Northbridge New South Wales 2063 (AU); LAWRENCE, Phillip Wayne, Cammeray New South Wales 2062 (AU)
(74) Representative: Müller Schupfner & Partner Patent- und Rechtsanwaltspartnerschaft mbB
(86) International application number: PCT/AU2017/051185
(87) International publication number: WO 2018/076068

(56) References cited:
- EP-A1- 2 703 180
- US-A- 4 272 590
- US-A- 4 524 093
- US-A1- 2004 061 755
- US-A1- 2010 075 061
- US-A1- 2011 227 992
- US-A1- 2013 222 501
- US-A1- 2013 229 291
- US-A1- 2015 015 639
- US-A1- 2015 191 613
- US-A1- 2016 152 034

## Description

### FIELD OF THE INVENTION

The present invention relates to the field of printing and in particular to curable primer, coating and ink compositions a method for coating a substrate and a method for producing a coated substrate .

### BACKGROUND OF THE INVENTION

The following discussion of the prior art is provided to place the invention in an appropriate technical context and enable the advantages of it to be more fully understood. It should be appreciated, however, that any discussion of the prior art throughout the specification should not be considered as an express or implied admission that such prior art is widely known or forms part of the common general knowledge in the field.

Inkjet printing on office and home printers has been commonplace for over 10 years. However, it is only in the last five years that inkjet printing has started to make serious inroads in commercial printing. The main advantage of inkjet printing for industrial or commercial printing is that the setup time is greatly reduced by eliminating the requirement for production and use of printing plates, and that the computerised systems which control the printing process can be easily programmed to print different jobs one after the other, with as many or as few copies as required. Within each print job it is the ability to handle "variable data" which sets digital printing apart from its predecessor forms, which include offset, letterpress, gravure and flexo, all of which require the making of prepress plates or cylinders which dictates a minimum run length for a commercially viable result. Commercial application of inkjet printing allows the economic printing of very short run jobs which can include books, newspapers, brochures, leaflets, flyers as well as a wide range of other advertising materials and other commercial printing.

The take-up of industrial and commercial inkjet printing has, however, been relatively slow due to the high cost of the inks. Technically, the inks also have some shortcomings since their very high water content creates a degree of show-through on lightweight papers and newsprint in particular, and that same high water content also means considerable heat has to be applied to dry the inks adequately. Paper generally does not respond well to high degrees of applied heat after its initial formation at the paper mill since it can significantly reduce the moisture content, resulting in the need to re-moisten the sheet before subsequent post-printing operations including folding, cutting and binding.

Conventional water-based inkjet inks also have a limited range of substrates to which they achieve adequate adhesion. Even for paper, it has been found necessary to manufacture specialist papers for inkjet inks to provide reasonable quality printing. These papers can be typically up to 50% more expensive than papers used for the previous generation of printing modalities. When this expense is combined with the cost of the conventional inkjet inks, the overall consumables cost is considerable, and has had a negative impact on the take-up rate of inkjet printing in commercial and industrial applications.

Conventional water-based inkjet inks using water dispersible resins (in the form of an emulsion or a colloid) can be up to 95% water by weight. They are made with either dye or pigments as colorants, with the latter being even more expensive than the former. Accordingly, as described in International PCT publication No. WO 2013/132439 A1, these inks may require high temperatures above 100°C to evaporate the water content and dry the inks, which involves additional processing steps and increases the overall cost of printing.

UV inkjet inks are also commercially available, which are generally not water-based but mostly made from 100% solids hydrophobic monomers and oligomers and diluted with volatile organic solvents (VOCs), for example glycol ether solvents. These inks are generally used for wide format printing of banners and polymeric films and other synthetic substrates and large-scale commercial jobs in sheet form and, by comparison with conventional water-based inkjet inks, have a wider range of substrates to which they can provide adequate adhesion. These inks can also be used for the printing of labels where the emphasis is generally printing on polymer film.

An example of this type of ink is described in International PCT Publication No. WO 2016/007593 A1 wherein the inventors acknowledge the need for inclusion of glycol ether solvents. The particular solvents nominated in this patent are stated by the US EPA to create the following health risks - "Acute (short-term) exposure to high levels of the glycol ethers in humans results in narcosis, pulmonary edema, and severe liver and kidney damage. Chronic (long-term) exposure to the glycol ethers in humans may result in neurological and blood effects, including fatigue, nausea, tremor, and anaemia." For at least these reasons, it would be advantageous to avoid the use of VOCs in the printing process.

Commercially, another significant disadvantage of these inks is their cost, being more than five times the cost of UV lithographic inks and more than 10 times the cost of conventional lithographic or flexographic inks. As indicated previously, from an environmental perspective they are also undesirable since they contain VOCs, which are being phased out of the printing industry globally to reduce pollution and increase health and safety.

The only known commercially available water-based UV inkjet ink is manufactured by the SunJet Division of Sun Chemical, a subsidiary of Dainippon Ink and Chemical. However these inks require a two-step process to completely cure them. First, they have to be exposed to considerable heat to drive off the high water content, followed by subjecting them to a form of radiation curing, such as UV or EB, for cross-linking and curing. WO 2015/183719A1 provides the detail of this 2-step process.

Prior to application of ink, it is known in the art to apply a primer or coating to improve the surface of a substrate and/or make it more receptive to the ink. However, conventional primers and coatings are solutions designed to maintain the essential haptic or look and feel of the original substrate, and thus must be specifically tailored for application to a particular type of substrate and for a specific finish. Accordingly, printers are required to keep multiple different primer/coating compositions on hand to treat the variety of different printing substrates they use, and to achieve a range of different finishes for any given substrate, which incurs substantial costs and requires storage and handling of multiple primer/coating compositions.

It is also conventional in the art to convert matte paper substrates to glossy paper substrates by applying and drying several layers of calcium carbonate/clay coating and then subjecting that coating to an expensive and complex calendering process at the paper mill. That process involves running the paper web through rollers running at differential speeds which are heated to at least 200°C, and applying pressure to the paper web of up to 2000 psi. The process requires considerable energy input. In such a specialised calendering unit of a paper machine, the paper web is crushed to less than its original caliper and emerges with a gloss level which is dictated largely by the temperature, the pressure, and the material used to wrap the stainless-steel rollers. The material wrapping the steel rollers is generally a compressed cardboard material which wears out reasonably quickly resulting in high maintenance and running costs.

It is an object of the present invention to overcome or ameliorate one or more the disadvantages of the prior art, or at least to provide a useful alternative.

It is an object of a preferred embodiment of the present invention to provide water-based inks or coatings which are curable by UV or EB radiation without the need for any external heat to initially drive off water, thereby providing a 1-step curing process. A further object of a preferred form of the invention is to provide inks or coatings which improve the overall energy efficiency of a printing or a coating process, respectively. A further object of a preferred form of the invention is to provide inks which have low viscosity comparable to conventional inks which require heating to achieve a low viscosity. A further object of a preferred form of the invention is to provide coatings which enable a reduction of ink at the substantially the same colour density compared to printing with the same ink on an uncoated substrate. A further object of a preferred form of the invention is to provide inks and coatings which provide significant reduction of "show-through" of print on lightweight paper substrates, and to facilitate colour printing, including 4-colour printing, with inkjet, whereas up until now these "thin paper" substrates have been limited to monochrome printing with inkjet, if they were printable at all. A further object of a preferred form of the invention is to provide coatings that can be used in the final stages of the papermaking process to provide surface finishes which are printable by digital toner and inkjet printing methods as well as conventional printing methods of lithographic and flexographic printing.

### SUMMARY OF THE INVENTION

The present invention relates to a composition, method and use as defined in the independent claims. The present invention further relates to radiation curable water-based compositions, including inkjet coatings and inks, which can be cured at high speed without the need for external applied heat to dry the water content.

The compositions of the invention, when used as coatings or primers, create a surface on cellulosic substrates and polymeric films which is suitable for printing on by most printing methods including but not limited to inkjet, wet and dry toner systems, lithographic, gravure and flexographic.

The primers and coatings allow printing, for example, 4-colour printing, on lightweight papers by conventional water based inkjet inks which papers could previously not be printed with this method; whilst the compositions of the invention, when used as inkjet inks, may eliminate one or more of the shortcomings of conventional radiation curable inkjet inks.

According to a first aspect of the present invention, there is provided an aqueous, curable coating or inkjet ink composition comprising: at least one water-soluble monomer represented by Formula I: 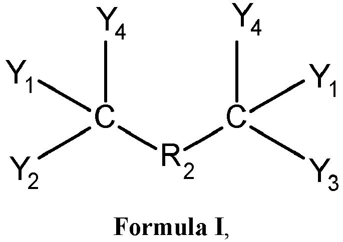 as defined in claim 1.

The following features may be used in conjunction with the first aspect, either alone or in any suitable combination.

The monomer may have a solubility of at least 40 g/L in water at 25 °C. The composition may comprise between 5 and 90 wt% water-soluble monomer.

According to a second aspect of the present invention, there is provided an aqueous, curable coating or inkjet ink composition comprising one or more reaction products produced by reacting *N*,*N*'-(1,2-dihydroxyethelene) bisacrylamide (DHEBA) with one or two molar equivalents of an alcohol-containing water-soluble acrylate or methacrylate monomer in water.

According to a third aspect of the present invention, there is provided an aqueous, curable coating or inkjet ink composition comprising one or more reaction products produced by reacting glyoxal, *N*-methylol acrylamide and acrylamide in aqueous solution at a pH of 7-8.

In the second or third aspects, the reaction products may comprise one or more of the following compounds:

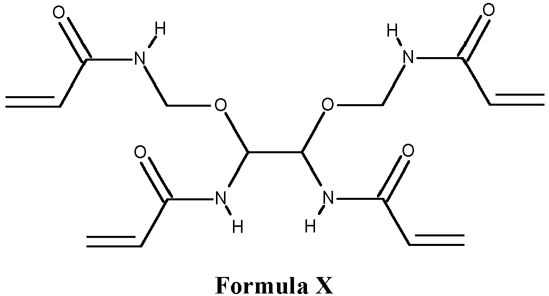

### N-[[2,2-bis(prop-2-enoylamino)-1-[(prop-2-enoylamino)methoxy]ethoxy]methyl]prop-2-enamide,

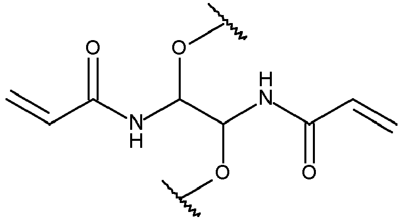

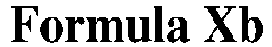

where each "∼∼∼" in Formula Xb is independently -H or -CH₂NHC(=O)CH=CH₂, or

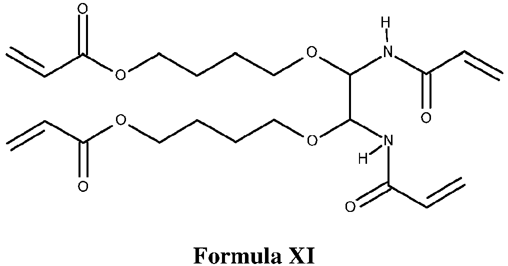

### 4-[1,2-bis(prop-2-enoylamino)-2-(4-prop-2-enoyloxybutoxy)ethoxy]butyl prop-2-enoate.

According to a fourth aspect of the present invention, there is provided an aqueous, curable coating or inkjet ink composition comprising one or more reaction products produced by reacting glyoxal with two, three or four molar equivalents of an alcohol-containing water-soluble acrylate or methacrylate monomer in water.

The reaction products of the fourth aspect may comprise the following compound:

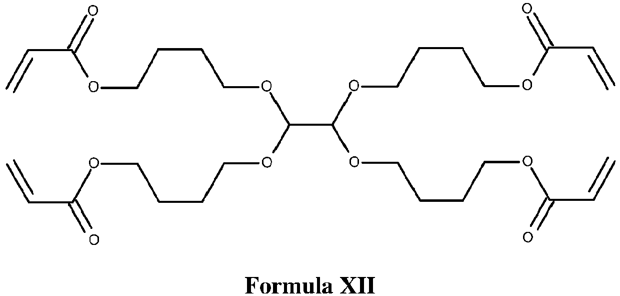

### 4-[1,2,2-tris(4-prop-2-enoyloxybutoxy)ethoxy]butyl prop-2-enoate.

In the second and/or fourth aspect, the alcohol-containing water-soluble acrylate or methacrylate monomer may be of Formula XIII, XIV, XV or XVI: 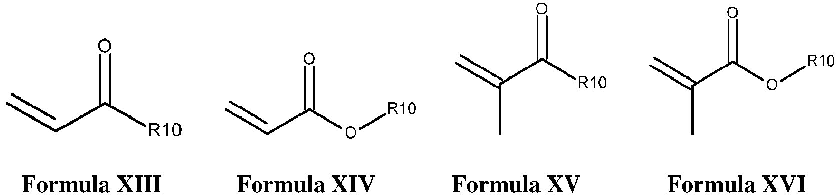 wherein R10 is a linear, branched or cyclic C₁-C₈ alkyl or alkenyl or aromatic group bearing at least one hydroxy substituent. For example, R10 may be a linear or branched C₁-C₈ alkyl group bearing one hydroxy substituent.

In the second and/or fourth aspect, wherein the alcohol-containing water-soluble acrylate or methacrylate monomer is 1-hydroxyethyl acrylate, 2-hydroxyethyl acrylate, 1-hydroxypropyl acrylate, 2-hydroxypropyl acrylate, 3-hydroxypropyl acrylate, (1-hydroxy-1-methyl-ethyl) prop-2-enoate, 1-hydroxybutyl acrylate, 2-hydroxybutyl acrylate, 3-hydroxybutyl acrylate, 4-hydroxybutyl acrylate, (2-hydroxy-2-methyl-propyl)-prop-2-enoate, 1,4-cyclohexanedimethanol monoacrylate, diethylene glycol monoacrylate, or diethylene glycol monomethacrylate.

According to a fifth aspect of the present invention, there is provided an aqueous, curable coating or inkjet ink composition comprising one or more reaction products produced by reacting glyoxal and a water-soluble *N*-hydroxyalkyl acrylamide or *N*-hydroxyalkyl methacrylamide in water.

In the fifth aspect, the water-soluble *N*-hydroxyalkyl acrylamide or *N*-hydroxyalkyl methacrylamide may be of Formula XVII or XVIII: 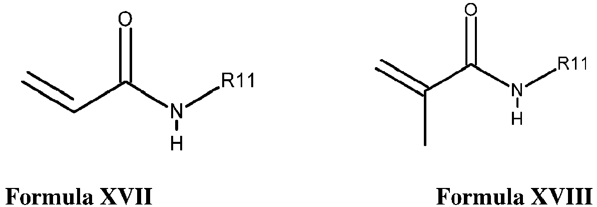 wherein R11 is a linear, branched or cyclic C₁-C₈ alkyl or alkenyl or aromatic group bearing at least one hydroxy substituent. For example, R11 may be a linear or branched C₁-C₈ alkyl group bearing at least one hydroxy substituent.

The following features may be used in conjunction with any one or more of the second to fifth aspects, either alone or in any suitable combination.

The reacting may be conducted at a temperature of between 65 and 85 °C. The one or more reaction products may have a solubility of at least 40 g/L in water at 25 °C. The one or more reaction products may be present in the composition at a concentration of between 5 and 90 wt%.

The following features may be used in conjunction with any one or more of the first to fifth aspects, either alone or in any suitable combination.

The composition may be curable by UV or EB radiation. The composition may comprise a UV photoinitiator. The UV photoinitiator may be selected from 2,4,6-trimethylbenzoyl-diphenyl-phosphineoxide (TPO), or BAPO. The composition may include a thermally reactive free radical catalyst or initiator, such as BAPO and Irgacure 184. The composition may thus be thermally curable via IR such that the temperature of the substrate is increased to at least 60° C to initiate polymerisation. The composition may be UV or EB cured without the application of heat.

The composition may comprise a dye. The composition may comprise a pigment. The composition may comprise a pigment and a dye. The composition may comprise between 10 and 50 % by weight water. The composition may comprise a surface tension modifier and/or a wetting agent. The composition may provide good adhesion to a substrate to which it is applied, as measured by a standard adhesion test. The composition may have a viscosity of between 50 and 800 mPa.s (Cp) at room temperature (25°C).

The substrate may be a cellulosic material such as paper or cardboard, or a woven, nonwoven, natural, artificial, or polymeric material selected from polyester, polyethylene terephthalate (PET), low density polyethylene (LDPE), vinyl, polyethylene (PE). or polypropylene (PP).

The composition may be a coating composition. The coating composition may have a viscosity of between 100 and 600 Cp at room temperature (25°C). It may comprise between 5 and 20 wt% of the water-soluble monomer. It may comprise between 5 and 20 wt% of the one or more reaction products. The coating composition may comprise an organic hollow sphere polymeric pigment. The organic hollow sphere polymeric pigment may be present in the composition in an amount of between 10 and 25 wt% (g solids/100 g composition). The coating composition may be adapted to deliver a friction-adjustable glossy surface finish to a substrate after curing. The friction may be provided by a roller having a stainless steel, compressed cardboard or fabric surface. The surface finish may be printable by conventional water-based air dry inkjet inks at commercial printing speeds.

The hollow sphere polymeric pigment may be present in the composition in an amount of between 10 and 25 wt% (g solids/100 g composition). In other embodiments, the pigment may be present in 25 to 30, 30 to 40, 40 to 50, 50 to 60, or 60 to 70 wt%.

According to a sixth aspect of the present invention, there is provided use of the composition according to any one of the first to fifth aspects as a coating.

The composition may be an inkjet ink. The inkjet ink may have a viscosity of between 1 and 50 Cp at room temperature (25°C). The inkjet ink composition may comprise between 20 and 90 wt% of the water-soluble monomer. It may comprise between 20 and 90 wt% of the one or more reaction products.

According to a seventh aspect of the present invention, there is provided use of the composition according to any one of the first to fifth aspects as an inkjet ink.

According to an eighth aspect of the present invention, there is provided a method for coating a substrate to prepare a printable surface, the method comprising the steps of:
applying the aqueous, curable coating composition according to any one of the first to fifth aspects onto a substrate; and
curing the aqueous, curable coating composition to thereby provide said printable surface.

The following features may be used in conjunction with the eighth aspect, either alone or in any suitable combination.

The method for coating a substrate to prepare a printable surface may be devoid of an initial heating step, as it may not be required for removing some or all of the water in the composition. No heating step may be required to cure the composition.

The curing may be complete or substantially complete at line speeds in the range 30 m/minute - 600 m/minute. The composition may be cured to dryness. The printable surface may be an inkjet ink printable surface. In such cases, less than 80% conventional water-based inkjet ink may be required to maintain print density by comparison with printing on an uncoated substrate using the same inks when the printing is carried out on a cellulosic substrate.

The printable by a Liquid Electro Photographic Toner (LEP), a Dry Toner (Xerography), or an oil-based inkjet commercial printing system. The printable surface may be printable at commercial printing speeds in the range 30 m/minute - 600 m/ minute.

The coating composition may be transferred onto the substrate by way of conventional means such as gravure, roller coating, anilox, curtain coating, blade coating, spray bar or Mayer bar. The substrate may be a polymeric film, a three-dimensional plastic object, glass, metal or alloy, a natural or synthetic textile or fabric, or a cellulosic substrate such as paper, card or cardboard.

The aqueous, curable coating composition may be applied to the substrate at an area density of between 1 and 20 g/m².

According to a ninth aspect, there is provided a printed or coated substrate comprising a composition according to any one of the first to fifth aspects above.

The following features may be used in conjunction with the ninth aspect, either alone or in any suitable combination.

The cured coating weight of at least 2.0 g/m².on a lightweight cellulosic substrate under 40 g/m².may produce an increase in tensile strength in the machine direction of around 14%. The substrate is selected from lightweight Bible papers or newsprint or the like, which papers could previously not be printed with inkjet due to unacceptable show-through from one side of the sheet to the other.

According to a tenth aspect, there is provided a method of preparing a primer coating on a substrate, the method comprising the steps of:
applying a solution of sodium and/or ammonium (meth)acrylate onto said substrate; and
polymerising the sodium and/or ammonium (meth)acrylate *in situ.*

The following features may be used in conjunction with the tenth aspect, either alone or in any suitable combination.

The sodium and/or ammonium (meth)acrylate may be polymerised by exposure to UV, EB or IR energy. The primer coating may adhere to the substrate. The water may be absorbable into the primer coating such that inkjet printing can be undertaken at line speeds of 30m/minute to 600m/minute. The primer coating may further comprise a dissolved metal species. The dissolved metal species may be solubilised ZnO. The dissolved metal species may be present at a concentration of between 5 and 20 wt%. The primer coating may further comprise a photoinitiator and/or a thermal initiator. The substrate may be a polymeric film, a three-dimensional plastic object, glass, metal or alloy, a natural or synthetic textile or fabric, or a cellulosic substrate such as paper, card or cardboard.

According to an eleventh aspect, there is provided a primer coating on a substrate when produced by the method according to the tenth aspect above.

According to a twelfth aspect of the present invention, there is provided a method for producing a substrate having a coating thereon whereby the gloss level of said coating is controllable to a predetermined level, the process comprising the steps of:
applying a coating composition according to any one of the first to fifth aspects above onto said substrate;
polymerising said coating composition to produce a cured coating; and buffing the surface of said cured coating sufficiently to achieve said predetermined gloss level.

The buffing step is achieved by contacting the surface of said coating with a roller rotating in a first direction and moving the substrate with respect to the roller in the opposite direction to the first direction. The roller may be a stainless-steel roller, compressed cardboard roller or a fabric covered roller.

According to a thirteenth aspect, there is provided a substrate having a surface having a predetermined level of gloss when produced by the method according to the twelfth aspect above.

According to a fourteenth aspect, there is provided an inkjet printing press comprising:
a coating means for applying a coating according to any one of claims 1 to 40 onto one or both sides of a substrate to be coated;
means to cure said coating(s) to produce a coated printable substrate; and means to print onto said coated printable substrate.

The following features may be used in conjunction with the fourteenth aspect, either alone or in any suitable combination.

The substrate may be a low-grade low-cost paper substrate. The curing means may be selected from UV, EB and/or thermal. The printing means may utilise an inkjet ink according to any one of the first to fifth aspects above. The printing means may utilise a commercially available inkjet ink such as HP ink, Canon ink, or Epson ink. The printing means may be selected from lithographic, flexographic, gravure, dry or liquid toner systems, HP Indigo and Landa Nanographic. The coating means may be selected from gravure, roller coating, anilox, curtain coating, blade coating, spray bar or Mayer bar. The inkjet printing press may be a web-fed press, or it may be a sheet-fed press.

In one embodiment, there is provided a coating composition comprising a monomer as defined in the first aspect, or the reaction products of a reaction described in the second or third aspects, wherein said composition comprises an organic hollow sphere polymeric pigment, wherein the composition is adapted to deliver a friction-adjustable glossy surface finish to a substrate after curing.

In another embodiment there is provided a method for producing a substrate having a coating thereon whereby the gloss level of said coating is controllable to a predetermined level, the process comprising the steps of: applying a coating composition onto said substrate, wherein the coating composition comprises a monomer as defined in the first aspect, or the reaction products of a reaction described in the second or third aspect, wherein the composition further comprises an organic hollow sphere polymeric pigment; polymerising said coating composition to produce a cured coating; and buffing the surface of said cured coating sufficiently to achieve said predetermined gloss level.

In a further embodiment, there is provided an inkjet printing press comprising: a coating means for applying a coating onto one or both sides of a substrate to be coated, wherein the coating composition comprises a monomer as defined in the first aspect, or the reaction products of a reaction described in the second or third aspect, wherein the composition further comprises an organic hollow sphere polymeric pigment; means to cure said coating(s) to produce a coated printable substrate; and means to print onto said coated printable substrate

In a further embodiment, there is provided a coating composition comprising a monomer as defined in the first aspect, or the reaction products of a reaction described in the second or third aspects, wherein the composition has a water content of 25-40 wt%.

In another embodiment, there is provided a method for coating a substrate to prepare a printable surface, the method comprising the steps of: applying an aqueous, curable coating composition comprising a monomer as defined in the first aspect, or the reaction products of a reaction described in the second or third aspects, wherein the composition has a water content of 25-40 wt%, onto a substrate; and curing the aqueous, curable coating composition to thereby provide said printable surface.

In a further embodiment, there is provided an inkjet printing press comprising: a coating means for applying a coating onto one or both sides of a substrate to be coated, wherein the coating composition comprises a monomer as defined in the first aspect, or the reaction products of a reaction described in the second or third aspects, wherein the composition has a water content of 25-40 wt%; means to cure said coating(s) to produce a coated printable substrate; and means to print onto said coated printable substrate

### BRIEF DESCRIPTION OF THE DRAWINGS

Preferred embodiments of the invention will now be described, by way of example only, with reference to the accompanying drawings in which:
Figure 1a shows inkjet printing on uncoated NorNews (42 g/m²) newsprint from Norwegian paper company Norske Skog at x400 magnification, and Figure 1b shows inkjet printing on paper coated on both sides with 2.0 g/m².of the composition of Example 8.
Figure 2 is a graph of show-through optical density on coated vs uncoated Bolloré 34 g/m².(measurement by independent research laboratory). Matte coating is the composition of Example 8; satin coating is the composition of Example 9, and gloss coating is the composition of Example 10. All compositions applied to both sides of paper in an amount of 2.0 g/m². This graph shows that the optical show-through is about an order of magnitude better on the coated substrates relative to uncoated substrate.
Figure 3 is a graph of gloss values (such as measured using ASTM D523-14 Specular gloss) on coated versus uncoated Bolloré 34 g/m².(measurement by independent research laboratory) showing significantly better gloss values on the satin-coated and the gloss version of the coated substrate relative to uncoated substrate.
Figure 4 is an illustration of an inkjet press line with priming/pre-coating using water-based radiation curable inks/coatings;
Figure 5 is an illustration of an inkjet press line with radiation curing priming/pre-coating and using conventional inkjet inks/coatings; and
Figure 6 is an illustration of a liquid electrophotographic toner (LEP) system or HP Indigo digital press line or Landa Nanographic press line with radiation cure priming/pre-coating.

### DEFINITIONS

In describing and claiming the present invention, the following terminology will be used in accordance with the definitions set out below. It is also to be understood that the terminology used herein is for the purpose of describing particular embodiments of the invention only and is not intended to be limiting. Unless defined otherwise, all technical and scientific terms used herein have the same meaning as commonly understood by one having ordinary skill in the art to which the invention pertains.

Unless the context clearly requires otherwise, throughout the description and the claims, the words 'comprise', 'comprising', and the like are to be construed in an inclusive sense as opposed to an exclusive or exhaustive sense; that is to say, in the sense of 'including, but not limited to'.

The examples are not intended to limit the scope of the invention. In what follows, or where otherwise indicated, '%' will mean 'weight %', 'ratio' will mean 'weight ratio' and 'parts' will mean 'weight parts'.

The terms 'predominantly' and 'substantially' as used herein shall mean comprising more than 50% by weight, unless otherwise indicated.

The recitation of a numerical range using endpoints includes all numbers subsumed within that range (e.g., 1 to 5 includes 1, 1.5, 2, 2.75, 3, 3.80, 4, 5, etc.).

The terms 'preferred' and 'preferably' refer to embodiments of the invention that may afford certain benefits, under certain circumstances. However, other embodiments may also be preferred, under the same or other circumstances. Furthermore, the recitation of one or more preferred embodiments does not imply that other embodiments are not useful, and is not intended to exclude other embodiments from the scope of the invention.

As used herein, the term "primer" is understood to refer to a preparatory coating ("pre-coating") or undercoat applied directly to a substrate surface prior to printing. A primer is generally devoid of pigment.

As used herein, the term "coating" is understood to refer to a pigmented preparatory coating ("pre-coating") or undercoat applied directly to a substrate surface prior to printing.

As used herein, the term "varnish" is understood to refer to a clear ink that is applied after printing to protect the printed page.

As used herein, the term "ink" is understood to refer to a coloured (i.e., non-colourless) substance applied during printing to produce an image, text or design. Unless the context indicates otherwise, "ink" as used herein refers to "inkjet ink".

As used herein, viscosity at a given temperature refers to viscosity as measured using a Brookfield RVT Viscometer equipped with Spindle no.4 and 6 at 20 and 100 rpm.

As used herein in the specification and in the claims section that follows, the term "pigment" refers to a finely divided solid colorant. The pigment may have an organic and/or inorganic composition. Typically, pigments are insoluble in, and essentially physically and chemically unaffected by, the vehicle or medium in which they are incorporated. Pigments may be coloured, fluorescent, or pearlescent. Pigments may alter appearance by selective absorption, interference and/or scattering of light. They are usually incorporated by dispersion in a variety of systems and may retain their crystal or particulate nature throughout the pigmentation process.

As used herein in the specification and in the claims section that follows, the term "dye" refers to at least one coloured substance that is soluble or goes into solution during the application process and imparts colour by selective absorption of light.

As used herein, the term "cure" (and related terms such as "curable") refers to a process whereby monomers polymerise, and optionally also crosslink, to form an optionally crosslinked polymer. "Curable" thus refers to the property of a monomer that it may be polymerised, or be used to crosslink polymer chains, or both.

### DETAILED DESCRIPTION

The skilled addressee will understand that the invention comprises the embodiments and features disclosed herein as well as all combinations and/or permutations of the disclosed embodiments and features.

### Monomers

### Monomers of Formula I

According to a first aspect of the invention, there is provided an aqueous, curable coating or inkjet ink composition comprising at least one water-soluble monomer represented by Formula I: 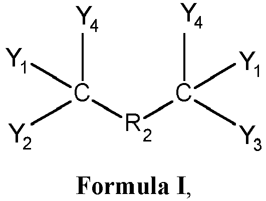 as defined in claim 1.

"Alkenyl" means a branched or unbranched unsaturated hydrocarbon chain comprising a designated number of carbon atoms. For example, C₂-C₆ straight or branched alkenyl hydrocarbon chain contains 2 to 6 carbon atoms having at least one double bond, and includes but is not limited to substituents such as ethenyl, propenyl, iso-propenyl, butenyl, iso-butenyl, tert-butenyl, n-pentenyl, n-hexenyl, and the like. It is also contemplated as within the scope of the present invention that "alkenyl" may also refer to an unsaturated hydrocarbon chain wherein any of the carbon atoms of said alkenyl are optionally replaced with O, NH, S, or SO₂. For example, carbon 2 of 4-pentene can be replaced with O to form (2-propene)oxymethyl.

In some embodiments, C₁-C₅-alkyl and C₁-C₈-alkyl referred to above instead comprise C₁-C₅-alkenyl and C₁-C₅-alkenyl. In some embodiments -(CH₂)ₙ- referred to above comprise alkenyl.

In some embodiments each Y₄ are connected by a linking group forming a 5-8 membered carbocycle or heterocycle containing any combination of CH₂, O, S, or N in any chemically stable oxidation state, where any of the atoms of said ring structure are optionally substituted in one or more positions.

The term "carbocycle" refers to an organic cyclic moiety in which the cyclic skeleton is comprised of only carbon atoms whereas the term "heterocycle" refers to an organic cyclic moiety in which the cyclic skeleton contains one or more heteroatoms selected from nitrogen, oxygen, or sulfur and which may or may not include carbon atoms. Thus, the term "carbocycle" refers to a carbocyclic moiety containing the indicated number of carbon atoms. The term "C₃-C₈ cycloalkyl", therefore, refers to an organic cyclic substituent in which three to eight carbon atoms form a three, four, five, six, seven, or eight-membered ring, including, for example, a cyclopropyl, cyclobuty;, cyclopentyl, cyclohexyl, cycloheptyl, or cyclooctyl ring. As used herein, "carbocycle" may also refer to two or more cyclic ring systems which are fused to form, for example bicyclic, tricyclic, or other similar bridged substituents (e.g. adamantyl).

It will be appreciated that -(CH₂)ₙ- described herein may be linear or branched alkyl. Examples are methyl, ethyl, propyl, isopropyl, n-butyl, sec-butyl, isobutyl, tert-butyl, pentyl, hexyl, heptyl, 2,4,4-trimethylpentyl, 2-ethylhexyl, octyl, nonyl, decyl, dodecyl, tetradecyl, pentadecyl, hexadecyl, octadecyl, icosyl, *etc.*

The compositions described herein may use monomers based on glyoxal (OCHCHO). Under suitable reaction conditions, glyoxal can react with -OH terminated and also primary amine terminated (meth)acrylates to produce multi-functional monomers. Aqueous solutions of the glyoxal-based monomers disclosed herein generally have viscosities of between about 20 centipoise (cP) and 35 cP at room temperature, i.e. about 22°C, which is lower than the viscosity of other known water-based inkjet inks, which require heating of the ink/coating to temperatures well above room temperature to achieve low enough viscosities. This adds expense and complication to the printing and coating process. Accordingly, the primers, coatings and inks described herein avoid or substantially avoid the requirement to heat the composition, which saves time and expense and is a significant advantage over the prior art. A further advantage of the compositions of the invention is that the viscosity can be reduced or controlled to a predetermined value or range if required by dilution with water. The monomers of the invention also exhibit very little oxygen inhibition, and are fast curing.

The present invention provides water-based compositions which can be cured by radiation means including for example ultraviolet (UV), electron beam (EB), or alternatively by a heat source such as infrared (IR), or by a combination of UV/EB and IR. Whilst the inks and primers/coatings of the invention can be cured with a heat source such as IR, this is important only for commercial convenience of inkjet presses already fitted with IR drying facilities. Preferred embodiments of the invention relate to UV or EB radiation curable inks, primers and coatings where no external heat is required for curing. Being water-based, the inks and coatings of the invention are significantly more environmentally friendly than the current generation of UV cure inkjet inks in use commercially, which use solvents to reduce the viscosity of the composition resulting in high levels of VOC gases being emitted during the drying process. The present invention is thus considerably more suited to the printing industry which, over recent times, is focused on reducing the level of VOCs created during printing processes. The invention is also unique in the field of water based inkjet inks in that no external heat is required to drive off the water content.

The coatings and inks of the invention further enable the design of a completely new form of inkjet printing press, which uses the coatings to create an entirely new surface on a cellulosic substrate. The new surface upgrades the printability quality of the original substrate to allow for a high quality printed product to be produced, using either the inks of the invention or any other inks, or wet or dry toner systems, or other digital printing modality, including but not limited to HP Indigo and Landa Nanographic.

The aqueous, curable coating or inkjet ink composition of the invention comprises a tri-functional or tetra-functional monomer as per Formula I, or comprises a mixture of tri-, and/or tetra-functional monomers as per Formula I. As used herein, the term "functional" as it relates to monomers describes the number of unsaturated (C=C) bonds present in the monomer, i.e., tri-functional refers to a monomer having three C=C moieties and tetra-functional refers to a monomer having four C=C moieties.

In one preferred embodiment the aqueous, curable coating or inkjet ink composition comprises one or more of: *N*,*N*'-(1,2-dihydroxyethelene) bisacrylamide (DHEBA)(Formula Xa); a compound of Formula X; a compound of Formula Xb; a compound of Formula XI; a compound of Formula XII:

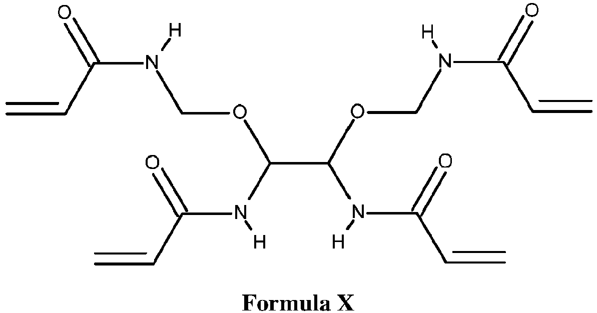

### N-[[2,2-bis(prop-2-enoylamino)-1-[(prop-2-enoylamino)methoxy]ethoxy]methyl]prop-2-enamide

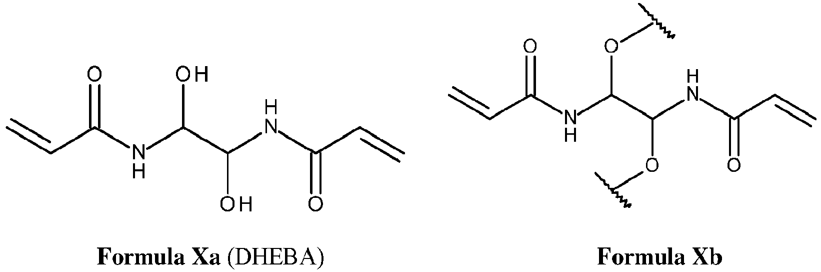

where each "∼∼∼" in Formula Xb may independently be -H or -CH₂NHC(=O)CH=CH₂.

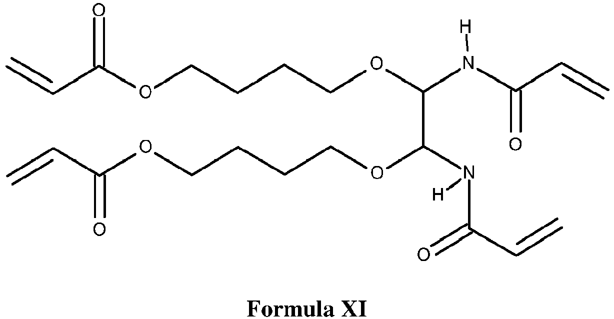

### 4-[1,2-bis(prop-2-enoylamino)-2-(4-prop-2-enoyloxybutoxy)ethoxy]butyl prop-2-enoate

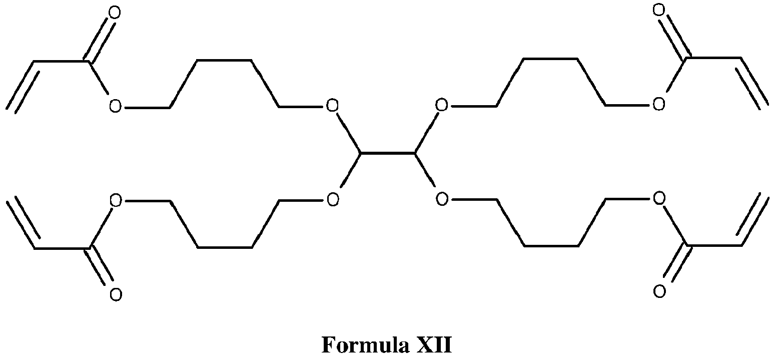

### 4-[1,2,2-tris(4-prop-2-enoyloxybutoxy)ethoxy]butyl prop-2-enoate

### Reaction products

In another preferred embodiment, the aqueous, curable coating or inkjet ink composition comprises: (a) the reaction products of a mixture of glyoxal, *N*-methylol acrylamide and acrylamide in aqueous solution at a pH of 7-8 preferably heated to 80°C; or (b) the reaction products of a mixture of DHEBA (Formula Xa) and 4-hydroxybutyl acrylate in aqueous solution preferably heated to 80°C or (c) the reaction products of a mixture of glyoxal and 4-hydroxybutyl acrylate in aqueous solution preferably heated to 75°C; or (d) the reaction products of a mixture of glyoxal and an alcohol-containing water-soluble acrylate or methacrylate in aqueous solution preferably heated to 75°C; or (e) the reaction products of a mixture of glyoxal and a water-soluble *N*-hydroxyalkyl acrylamide or *N*-hydroxyalkyl methacrylamide in aqueous solution preferably heated to 75°C. In (a), the molar ratio of reactants is preferably 1 mol glyoxal: 2 mol *N*-methylol acrylamide: 2 mol acrylamide. In (b), the molar ratio of reactants is preferably 1 mol DHEBA (Formula Xa): 2 mol 4-hydroxybutyl acrylate, but may be 1 mol DHEBA (Formula Xa): 1 mol 4-hydroxybutyl acrylate. In (c), the molar ratio of reactants is preferably 1 mol glyoxal: 4 mol 4-hydroxybutyl acrylate, but may be 1 mol glyoxal: 3 mol alcoho4-hydroxybutyl acrylate or 1 mol glyoxal: 2 mol 4-hydroxybutyl acrylate. In (d), the molar ratio of reactants is preferably 1 mol glyoxal: 4 mol alcohol-containing water-soluble acrylate, but may be 1 mol glyoxal: 3 mol alcohol-containing water-soluble acrylate or 1 mol glyoxal: 2 mol alcohol-containing water-soluble acrylate. In (e), the molar ratio of reactants is preferably 1 mol glyoxal: 4 mol water-soluble *N*-hydroxyalkyl acrylamide or *N*-hydroxyalkyl methacrylamide, but may be 1 mol glyoxal: 3 mol water-soluble *N*-hydroxyalkyl acrylamide or *N*-hydroxyalkyl methacrylamide, or may be 1 mol glyoxal: 2 mol water-soluble *N*-hydroxyalkyl acrylamide or *N*-hydroxyalkyl methacrylamide.

The reaction products of a mixture of glyoxal, *N*-methylol acrylamide and acrylamide in aqueous solution at a pH of 7-8, preferably heated to 80°C (a), may comprise a compound of Formula X; a compound of Formula Xa and/or a compound of Formula Xb. The reaction products of a mixture of DHEBA (Formula Xa) and 4-hydroxybutyl acrylate in aqueous solution, preferably heated to 80°C, (b) may comprise a compound of Formula XI.

The reaction products of a mixture of glyoxal and 4-hydroxybutyl acrylate in aqueous solution, preferably heated to 75°C, (c) may comprise a compound of Formula XII and/or a compound of Formula XIIa: 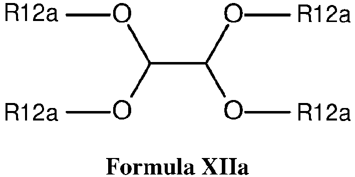 where each R12a is independently either H or derived from 4-hydroxybutyl acrylate by reaction through its alcohol group, and no more than two R12a groups are H.

The reaction products of a mixture of glyoxal and an alcohol-containing water-soluble acrylate or methacrylate in aqueous solution, preferably heated to 75°C, (d) may comprise a compound of Formula XIIb: 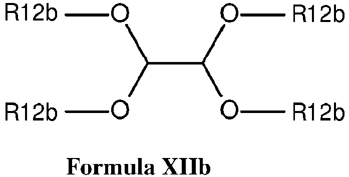 where each R12b is independently either H or derived from the alcohol-containing water-soluble acrylate or methacrylate by reaction through its alcohol group, and no more than two R12b groups are H.

The reaction products of a mixture of glyoxal and a water-soluble *N*-hydroxyalkyl acrylamide or *N*-hydroxyalkyl methacrylamide in aqueous solution, preferably heated to 75°C, (e) may comprise a compound of Formula XIIc: 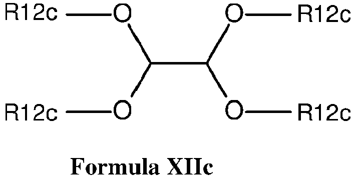 where each R12c is independently either H or derived from the water-soluble N-hydroxyalkyl acrylamide or *N*-hydroxyalkyl methacrylamide by reaction through its alcohol group, and no more than two R12c groups are H.

The alcohol-containing water-soluble acrylate or methacrylate may be of Formula XIII, XIV, XV, or XVI: 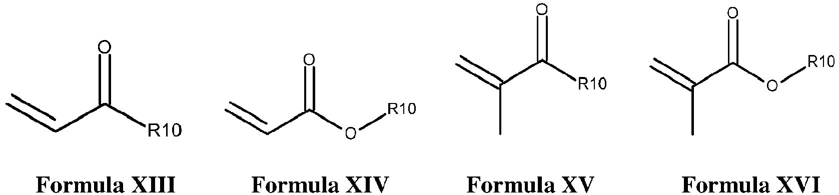 wherein R10 is a linear, branched or cyclic C₁-C₈ alkyl or alkenyl or aromatic group bearing at least one hydroxy substituent. In a preferred embodiment, R10 is a linear, branched or cyclic C₁-C₈ alkyl group bearing at least one hydroxy substituent, e.g., hydroxy-substituted methyl, ethyl, propyl, isopropyl, butyl, isobutyl, pentyl, cyclopentyl, 2-methylbutyl, hexyl, 2,3-dimethylbutyl, 3-methylpentyl, cyclohexyl, heptyl, octyl, 3-ethyl-2-methylpentyl, etc. In a more preferred embodiment, R10 is a linear, branched or cyclic C₁-C₈ alkyl group bearing one hydroxy substituent. In other embodiments, R10 is a linear, branched or cyclic C₁-C₈ alkyl group bearing two or more hydroxy substituents. In other embodiments, R10 is a linear, branched or cyclic C₁-C₈ alkyl or alkenyl or aromatic group bearing at least one hydroxy substituent and bearing at least one heteroatom, where the heteroatom is O. The alcohol-containing water-soluble acrylate or methacrylate may thus be 1-hydroxyethyl acrylate, 2-hydroxyethyl acrylate, 1-hydroxypropyl acrylate, 2-hydroxypropyl acrylate, 3-hydroxypropyl acrylate, (1-hydroxy-1-methyl-ethyl) prop-2-enoate, 1-hydroxybutyl acrylate, 2-hydroxybutyl acrylate, 3-hydroxybutyl acrylate, 4-hydroxybutyl acrylate, (2-hydroxy-2-methyl-propyl) prop-2-enoate, 1,4-cyclohexanedimethanol monoacrylate, diethylene glycol monoacrylate, diethylene glycol monomethacrylate etc. The alcohol-containing water-soluble acrylate or methacrylate preferably contains a primary alcohol functionality.

The water-soluble *N*-hydroxyalkyl acrylamide or *N*-hydroxyalkyl methacrylamide may be of Formula XVII or XVIII: 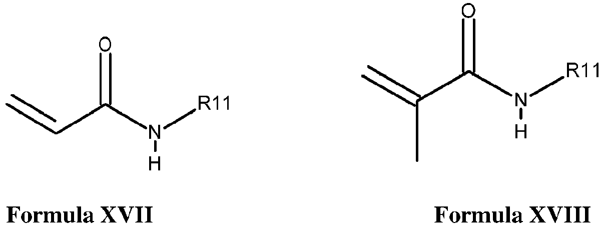 wherein R11 is a linear, branched or cyclic C₁-C₈ alkyl or alkenyl or aromatic group bearing at least one hydroxy substituent. In a preferred embodiment, R11 is a linear, branched or cyclic C₁-C₈ alkyl group bearing at least one hydroxy substituent, e.g., hydroxy-substituted methyl, ethyl, propyl, isopropyl, butyl, isobutyl, pentyl, cyclopentyl, 2-methylbutyl, hexyl, 2,3-dimethylbutyl, 3-methylpentyl, cyclohexyl, heptyl, octyl, 3-ethyl-2-methylpentyl, etc. In one embodiment, R11 is hydroxymethyl. In another embodiment, R11 is hydroxyethyl.

In a preferred embodiment, the reaction products of a mixture of glyoxal, *N*-methylol acrylamide and acrylamide in aqueous solution at a pH of 7-8 preferably heated to 80°C, or the reaction products of a mixture of glyoxal and a water-soluble *N*-hydroxyalkyl acrylamide or *N*-hydroxyalkyl methacrylamide in aqueous solution preferably heated to 75°C, are incorporated into a coating or primer composition.

In another preferred embodiment, the reaction products of a mixture of DHEBA (Formula Xa) and 4-hydroxybutyl acrylate in aqueous solution preferably heated to 80°C, or the reaction products of a mixture of glyoxal and 4-hydroxybutyl acrylate in aqueous solution preferably heated to 75°C, or the reaction products of a mixture of glyoxal and an alcohol-containing water-soluble acrylate or methacrylate in aqueous solution preferably heated to 75°C, are incorporated into an ink composition.

The water-soluble monomers of the present invention preferably have a viscosity of between 2 and 30 centipoise (cP) at at least one temperature in the range of 20-60°C in their pure form. For example, a viscosity between 2 to 4, 4 to 6, 6 to 8, 8 to 10, 10 to 12, 12 to 14, 14 to 16, 16 to 18, 18 to 20, 20 to 22, 22 to 24, 24 to 26, 26 to 28, or 28 to 30 cP, or of between 2 and 10 Cp, 5 and 20 Cp, 15 and 30 Cp, or of less than 60 Cp, less than 50 Cp, less than 40 Cp or less than 30 Cp. Where the monomer in pure form is a solid in the range of 20-60°C or part thereof, the viscosity of the monomer may instead refer to the viscosity of a solution of the monomer in water, where the monomer is present at a concentration of between 250 and 450 g/100g water. Accordingly, the monomers of the present invention preferably have a viscosity of between 2 to 4, 4 to 6, 6 to 8, 8 to 10, 10 to 12, 12 to 14, 14 to 16, 16 to 18, 18 to 20, 20 to 22, 22 to 24, 24 to 26, 26 to 28, or 28 to 30 cP in solution, or of between 2 and 10 Cp, 5 and 20 Cp, 15 and 30 Cp, or of less than 60 Cp, less than 50 Cp, less than 40 Cp or less than 30 Cp. One of skill in the art knows that viscosity may be adjusted appropriately for different types of printing, such as flexographic or rotogravure printing.

In some embodiments, the monomers have a solubility in water of greater than 5 g/L, 10 g/L, 20 g/L, 50 g/L, 100 g/L, 250 g/L, 500 g/L, or 1000 g/L at 25°C at a pH of between 5-9. Preferably, the monomers have a solubility of at least 40 g/L. The monomers of the present invention are preferably fully miscible with water. The monomers of the present invention are preferably fully miscible with water at temperatures of between 20 and 35 °C, or at a temperature of 25 °C. The monomers of the present invention are preferably infinitely soluble in water.

The monomers of the present invention may have a surface tension of around 50 milliNewton/m (mN/m) at at least one temperature in the range of 20-60°C.

The viscosity, solubility, and/or surface tension of reaction products produced from reactions (a) to (e) in the section entitled *'Reaction Products'* may correspond to the viscosity, solubility, and/or surface tension of monomers recited in the preceding paragraph. For example, the one or more of the reaction products from reactions (a) to (e) in the section entitled *'Reaction Products'* may have a solubility in water of greater than 5 g/L, 10 g/L, 20 g/L, 50 g/L, 100 g/L, 250 g/L, 500 g/L, or 1000 g/L at 25°C at a pH of between 5-9. Preferably, one or more of the reaction products have a solubility of at least 40 g/L.

The monomers and reaction products of the present invention are curable. The monomers and reaction products described herein may be curable by UV or electron beam (EB) radiation, or by IR radiation. In preferred embodiments, the monomers and reaction products are curable by application of UV or EB, and do not require pre-treatment with IR or heat. In use, UV or EB curing of the monomers and reaction products may generate heat *in situ,* which may provide sufficient thermal energy to drive water from the composition.

### Co-monomers

Preferably the aqueous curable coating or inkjet ink composition of the invention comprises one or more co-reactive water-soluble monomers. Co-monomers capable of being used in part in the compositions of the invention at a level between 0 and 50 percent by mass according to the entire composition include: carboxylic acids (acrylic acid), hydroxy acrylates (2-hydroxyethyl acrylate, 2-hydroxypropyl acrylate, 4-hydroxybutyl acrylate), alkyls, alicyclic acrylates (isobutyl acrylate, t-butyl acrylate, isooctyl acrylate, lauryl acrylate, stearyl acrylate, isobornyl acrylate, cyclohexyl acrylate), other functional monomers (2-methoxyethyl acrylate, methoxyethyleneglycol acrylate, 2-ethoxyethyl acrylate, tetrahydrofurfuryl acrylate, benzyl acrylate, ethyl carbitol acrylate, phenoxyethyl acrylate, N,N-dimethylaminoethyl acrylate, N,N-dimethylaminopropyl acrylamide, N,N-dimethylacrylamide, acryloylmorpholine, N-isopropylacrylamide, N,N-diethylacrylamide, N-vinylpyrrolidone, 2-(perfluorooctyl)ethyl acrylate, 3-perfluorohexyl-2-hydroxypropyl acrylate, 3-perfluorooctyl-2-hydroxypropyl acrylate, 2-(perfluorodecyl)ethyl acrylate, 2-(perfluoro-3-methylbutyl)ethyl acrylate), 2,4,6-tribromophenol acrylate, 2,4,6-tribromophenol methacrylate, 2-(2,4,6-tribromophenoxy)ethylacrylate), and 2-ethylhexyl acrylate. Other useful monomers are acrylated methylol urea and methylol melamine (meth)acrylate.

Other co-monomers capable of being used in part in the compositions of the invention at a level between 0 and 50 percent by mass according to the entire composition include cyclic lactam such as N-vinyl caprolactam, N-vinyl oxazolidinone and N-vinyl pyrrolidone, and secondary or tertiary acrylamides such as acryloyl morpholine, diacetone acrylamide, N-methyl acrylamide, N-ethyl acrylamide N-isopropyl acrylamide, N-t-butyl acrylamide, N-hexyl acrylamide, N-cyclohexyl acrylamide, N-octyl acrylamide, N-t-octyl acrylamide, N-dodecyl acrylamide, N-benzyl acrylamide, N-(hydroxymethyl)acrylamide, N-isobutoxymethyl acrylamide, N-butoxymethyl acrylamide, N,N-dimethyl acrylamide, N,N-diethyl acrylamide, N,N-propyl acrylamide, N,N-dibutyl acrylamide, N,N-dihexyl acrylamide, N,N-dimethylamino methyl acrylamide, N,N-dimethylamino ethyl acrylamide, N,N-dimethylamino propyl acrylamide, N,N-dimethylamino hexyl acrylamide, N,N-diethylamino methyl acrylamide, N,N-diethylamino ethyl acrylamide, N,N-diethylamino propyl acrylamide, N,N-dimethylamino hexyl acrylamide, and N,N'-methylenebisacrylamide, hydroxyalkyl functionalised melamine acrylate, hydroxyalkyl functionalised acrylated urea, and the like.

### Composition

### Aqueous

The compositions described herein are aqueous. The compositions may have a water content of between about 20 and about 80 % (w/w), for example, between 20 and 25, 25 to 30, 30 to 35, 35 to 40, 40 to 45, 45 to 50, 50 to 55, 55 to 60, 60 to 65, 65 to 70, 70 to 75, or 75 to 80 % (w/w). The compositions may have a water content of between about 10 and about 50 % (w/w), for example, of between 15 and 30% (w/w). The compositions described herein may have a water content of less than 40 % (w/w), or less than 35%, less than 30%, less than 25%, or less than 20%.

Advantageously, using water in the compositions described herein reduces the cost of the resulting inks and coating compositions substantially by comparison with conventional radiation cure inkjet inks which use volatile organic solvents. At the same time the compositions may be safer, healthier and more environmentally friendly. Furthermore, although conventional UV inkjet inks being 100% solids have tended to create the problem of heavy ink films when printed, the compositions of the present invention having a water content of between about 5 and about 40 % (w/w) advantageously allow the printed film weight to be reduced, resulting in improved print quality and lower cost. In one embodiment, there is the proviso that there is no organic solvent present in the composition.

Preferably the composition has a pH of between 7.0 to 9.5, or of between 7.0 and 8.0, or of between 8.0 and 9.0, or of 7.0, 7.5, 8.0, 8.5 or 9.0.

### Polymerisable components

The monomer may be present in the composition at a concentration of from 5 to 90 wt% (g monomer/100 g composition). For example, the monomer may be present in the composition at a solids concentration of greater than or equal to 5 wt%, 10 wt%, 15 wt%, 20 wt%, or 25 wt%, or 30 wt%, 35 wt%, or 40 wt%, or 45 wt%, or 50 wt%; or 55 wt%; or 60 wt%; 65 wt%, or 70 wt%. or 75 wt%, or 80 wt%, or 85 wt%, or 90 wt%. The monomer may be present in the composition at a solids concentration of between 5 and 15 wt%, or of between 10 and 20 wt%, or of between 20 and 40 wt%, or of between 40 and 65 wt%, or of between 50 and 75 wt%, or of between 65 and 90 wt%. For example, the monomer may be present in the composition at a solids concentration of 5 wt%, or 10 wt%, or 15 wt%, 20 wt%, or 25 wt%, or 30 wt%, or 35 wt%, or 40 wt%, or 45 wt%, or 50 wt%; or 55 wt%; or 60 wt%; 65 wt%, or 70 wt%. or 75 wt%, or 80 wt%, or 85 wt%, or 90 wt%, or 95 wt%. In a particular aspect, the present invention provides a water-based curable coating or inkjet ink composition comprising: 15 wt% to 45 wt% of one or more monomers as per Formula I; and 20 wt% to 60 wt% water. In one embodiment, the monomer of the invention is present at between 50 to 100 wt% of the composition, especially for a coating application. In another embodiment, the monomer of the invention is present at between 5 to 20 wt% of the composition, especially for a coating application. In one embodiment the monomer of the invention is present at between 20 to 95 wt% of the composition, especially for an ink application.

The concentration of reaction products produced from reactions (a) to (e) in the section entitled *'Reaction Products'* may correspond to the concentration of monomers recited in the preceding paragraph. For example, the reaction products from reactions (a) to (e) in the section entitled *'Reaction Products'* may be present in the composition at a concentration of from 5 to 90 wt% (g monomer/100 g composition).

The concentration of co-monomer may be from 0 to 50 wt% of the coating or ink composition of the invention. For example, between 0 and 5%, 5 to 10%, 10 to 15%, 15 to 20%, 20 to 25%, 25 to 30%, 30 to 35%, 35 to 40%, or 40 to 50 wt%.

### Additional components

The compositions of the present invention comprise at least one water-soluble monomer. Compositions of the present invention may further include any one or more of the following additional components: dye, pigment, photoinitiator, thermal initiator, levelling/wetting agent, defoamers, wetting aids, slip agents, biocides, stabilizers, fillers, rheological aids, pH modifiers, optical brighteners, adhesives, etc.

For example, the compositions as described herein may include a dye. Any suitable dye may be used. Suitable dyes for use in the ink or coating formulations of the present invention include: Duasyn Yellow 3GF-SF liquid, Duasyn Acid Yellow XX-SF, Duasyn Red 3B-SF liquid, Duasynjet Cyan FRL-SF liquid (all manufactured by Clariant); Basovit Yellow 133, Fastusol Yellow 30 L, Basacid Red 495, Basacid Red 510 Liquid, Basacid Blue 762 Liquid, Basacid Black X34 Liquid, Basacid Black X38 Liquid, Basacid Black X40 Liquid, Basonyl Red 485, Basonyl Blue 636 (all manufactured by BASF). The dye may be present in any suitable concentration. For example, the dye may be present at a concentration of 0.01 to 10 wt%.

The compositions as described herein may include a pigment or a mixture of pigments. Any suitable pigment(s) may be used. The pigments may be colour pigments. The pigments may be filler/extender pigments. Suitable pigments for use in the ink or coating formulations of the present invention may include: organic or inorganic pigments such as carbon black, metal oxides such as zinc oxide, titanium dioxide, zirconia, tin oxide, alumina and other aluminium oxides, and magnesium oxide, kaolin, calcium carbonate, limestone, barium sulfate (baryte), clay, mica, silica, an aluminosilicate (such as silica-deficient sodiumpotassium alumina silicate sold by Minex^{®} under the name Minex^{®} 7), phthalocyanine, anthraquinones, perylenes, carbazoles, monoazo and disazobenzimidazoles, rhodamines, indigoids, quinacridones, diazopyranthrones, dinitroanilines, pyrazoles, diazopyranthrones, pyrazoles, dianisidines, pyranthrones, tetracholoroisoindolines, dioxazines, monoazoacrylides and anthrapyrimidines. Polymer-based pigments, including hollow sphere polymeric pigments such as manufactured under the name Ropaque^{®} (Dow^{®}; hollow sphere polymeric pigment, 30% solids) or Celocor^{®} (Arkema^{®}; voided latex material, 30% solids), etc. may also be suitable. Commercial organic pigments classified according to Color Index International may be used, including, but not limited to, those according to the following trade designations: blue pigments PB1 , PB15, PB15:1, PB15:2, PB15:3, PB15 :4, PB15:6, PB16, PB60; brown pigments PB5, PB23, and PB265; green pigments PG1 , PG7, PG10 and PG36; yellow pigments PY3, PY14, PY16, PY17, PY24, PY65, PY73, PY74 PY83, PY95, PY97, PY108, PY109,PY110, PY113, PY128, PY129,PY138, PY139, PY150, PY151, PY154, PY156 PY175, PY180 and PY213; orange pigments P05, P015, P016, P031 , P034, P036, P043, P048, P060, P061 and P071; red pigments PR4, PR5, PR7, PR9, PR22, PR23, PR48, PR48:2, PR49, PR1l2, PR122, PR123, PR149, PR166, PR168, PR170, PRl77, PR179, PR190, PR202, PR206, PR207, PR224 and PR254: violet pigments PV19, PV23, PV32, PV37 and PV42; black pigments PBk1 , PBk6, PBk7, PBk8, PBk9, PBk10, PBk11, PBk12, PBk13, PBk14, PBk17, PBk18, PBk19, PBk22, PBk23, PBk24, PBk25, PBk26, PBk27, PBk28, PBk29, PBk30, PBk31 , PBk32, PBk33, PBk34, PBk35, NBk1 , NBk2, NBk3, NBk4, NBk6; combinations thereof, and the like. The pigment or mixture of pigments may be present in any suitable concentration. For example, the pigment may be present in the composition at a solids concentration of between 0.01 and 60 wt%, or between about 1 and 10 wt%, or between about 10 and 20 wt%, or between about 10 and 25 wt%, or between about 15 and 30 wt%, or between about 25 and 40 wt%, or between about 40 and 60 wt%, or of about 0.01, 0.5, 1, 2, 5, 10, 15, 20, 25, 30, 40 50 or 60 wt%.

In some embodiments, the average particle size (D₅₀) of the at least one pigment is not more than 120 nm, not more than 110 nm, not more than 100 nm, not more than 90 nm, not more than 80 nm, not more than 70 nm, not more than 65 nm, or not more than 60 nm. In some embodiments, the average particle size (D₅₀) of the pigment is at least 20 nm, at least 25 nm, at least 30 nm, at least 35 nm, at least 40 nm, at least 45 nm, at least 50 nm, at least 55 nm, at least 60 nm, at least 65 nm, or at least 70 nm. In various embodiments, the average particle size (D₅₀) of the pigment is in the range of 20-120 nm, in the range of 20-110 nm, in the range of 20-100 nm, in the range of 20-90 nm, in the range of 20-80 nm, in the range of 20-70 nm, in the range of 30-120 nm, in the range of 30-110 nm, in the range of 30-100 nm, in the range of 30-90 nm, in the range of 30-80 nm, in the range of 30-70 nm, in the range of 35-120 nm, in the range of 35-110 nm, in the range of 35-100 nm, in the range of 35-90 nm, in the range of 35-80 nm, in the range of 35-70 nm, in the range of 40-120 nm, in the range of 40-110 nm, in the range of 40-100 nm, in the range of 40-90nm, in the range of 40-80 nm, or in the range of 40-70 nm.

In some embodiments, the coating or ink of the invention, when substantially dried, contains at least 1.2 wt. %, at least 1.5 wt. %, at least 2 wt. %, at least 3 wt. %, at least 4 wt. %, at least 6 wt. %, at least 8 wt. %, or at least 10 wt. % of the dye and/or pigment.

The compositions as described herein may include a dye and a pigment. As colourants, dyes and pigments have significantly different characteristics hence create different properties in the finished ink. For instance, dye-based inks are generally more transparent, which results in more "pure" colour with higher vibrancy. Inkjet inks made from dyes are generally less expensive due to the dyes being about 50% of the cost of pigments. The cost of the latter is due to the machine processing required to grind the pigments to a nanoparticle size. By comparison, pigment inks generally have greater colour strength or density and when dried have been historically less water-soluble and more fade resistant by comparison with dye-based inks. In addition, they create higher resolution in printing due to the sharpness of the dots formed by the ink droplets. The use of dye-based inks in inkjet printing is to be preferred from a fluid mechanics perspective in that the dyes exist at the molecular level and therefore avoid the problem of inkjet clogging which has been, and remains, a problem for some pigment-based inkjet ink systems. Overall, the ability to create a dual-colourant inkjet ink allows the combination of some of the advantages of pigment inks whilst maintaining the relatively low-cost and preferable fluid mechanics of dye inks. To the best of the Applicant's knowledge, combining pigment and dye-based colourants in the same ink has not previously been achievable. The Applicant postulates that conventional water-based inkjet inks, with water contents in the range 75% to 95% are susceptible to phase separation of the dye and pigment.

The weight ratio of monomer(s) of the present invention to the dye and/or pigment in the ink and coating compositions described herein may be in the range of 0.1 to 10 to 10:0.1, such as 0.1 to 1,0.1 to 2, 0.1 to 3, 0.1 to 4, 0.1 to 5, 0.1 to 6, 0.1 to 7, 0.1 to 8, 0.1 to 9, 0.1 to 10, 10 to 1, 9 to 1, 8 to 1, 7 to 1, 6 to 1, 5 to 1, 4 to 1, 3 to 1, 2 to 1, or 1 to 1.

The compositions as described herein may include one or more photoinitiators, thermal initiators or polymerisation catalysts. The photoinitiators initiate polymerisation upon irradiation by UV radiation, and hence enable the compositions to be cured. Thermal initiators, such as heat-activated polymerisation catalysts, may be included where the compositions are to be cured by conventional IR radiation. Any suitable photoinitiator may be used. The skilled person will be aware of the various photoinitiators suitable for different radiation sources, such as those designed for use with LED-UV sources, mercury-arc UV sources, etc. Suitable photoinitiators may include: thioxanthones, phosphine oxide compounds, alpha-hydroxy ketones, benzophenones, aminobenzoates, alphaaminoalkylphenones, benzoin ethers and benzyl ketals. Any blend of photoinitiators may be used in the compositions of this invention, and include, but are not limited to, those types able to generate free radicals on irradiation such as benzophenone, 1-hydroxycyclohexyl phenyl ketone, 2-benzyl-2-dimethylamino-(4-morpholinophenyl)butan-1-one, diphenyl-(2,4,6-trimethylbenzoyl) phosphine oxide, phenyl bis(2,4,6-trimethylbenzoyl)phosphine oxide, 2,4,6-trimethylbenzoyl-diphenyl-phosphineoxide (TPO), bisacylphosphine oxide (BAPO), isopropylthioxanthone, diethylthioxanthone, and diester of 2-carboxymethoxy thioxanthone and poly tetramethyleneglyco1250. Suitable free-radical initiators with appropriate solubility in the curable material/solvent mixture are well-known to those skilled in the art, as are suitable levels of use (typically less than about 5% by weight). Other examples of suitable free-radical photo-initiators include Irgacure 2959, 184, 651, 750, 500, 127, 1700, 1800, 819 (Ciba Specialty Chemicals), Darocur TPO, 1173 etc. (Irgacure and Darocur are Trade Marks). Examples of suitable thermal initiators include VA 044 (2,2'-azobis [2-(2-imidazolin-2-yl)propane] dihydrochloride), VA057 (2,2'-azobis[N-(2-carboxyethyl)-2-methyl-propioamidine]) and VA086 (2,2'-azobis[2-methyl-N-2-hydroxyethyl)-propionamide]) from Wako Chemicals. The free-radical initiators currently favoured include bis(2,6-dimethylbenzoyl)-2,4,4-trimethyl pentylphosphine oxide, and, 2-hydroxy-2-methyl-1-phenyl-lpropanone, and mixtures thereof. Compositions comprising thermal initiators may require heating to at least 60 °C to initiate polymerisation. The photoinitiator may be present in any suitable concentration. For example, the photoinitiator may be present at a concentration of from about 0 to about 2 wt %. For example, the photoinitiators may be present in an amount of from about 0.1 to 2 wt%; from about 0.1 to about 1.5 wt%; or from about 0.5 to about 1 wt%. Other thermal initiators such as heat-activated polymerisation catalysts may be included where compositions are to be cured by conventional IR radiation. For example, benzoyl peroxide, tertiary butyl hydroperoxide, peroxide solution, ammonium persulfate, potassium persulfate, redox couples, sodium metabisulphite, Rongalite^{®}, etc.

The compositions as described herein may include a levelling/wetting agent. Any suitable levelling/wetting agent may be used. Suitable levelling/wetting agents include silicone or silicone polyether surfactants, such as sold by BYK^{®}, e.g., BYK-346, Dow Corning^{®}, e.g., Q2-5211, or a quaternary ammonium surfactant compound solution such as Quatramine C16/50. The levelling/wetting agent may be present in any suitable concentration. For example, the levelling/wetting agent may be present at a concentration of from about 0 to about 2 wt %, e.g., of from about 0.1 to 0.5 wt%; from about 0.5 to about 1.5 wt%; or from about 1.0 to about 2 wt%.

In some embodiments, the compositions of the invention further comprise a surfactant. In some embodiments, the surfactant is present in an amount of not more than 2 wt.%, not more than 1.5 wt.%, not more than 1 wt.%, or not more than 0.5 wt.%. In some embodiments, the surfactant is a non-ionic surfactant. In some embodiments, the surfactant is an anionic surfactant. In some embodiments, the surfactant is a cationic surfactant.

The compositions of the invention may also include one or more other acrylate and non-functional resin technologies. Possibilities in this area would include acrylated polyester dispersions such as the Laromer PE range from BASF; water soluble epoxy acrylates such as Laromer 8765 from BASF and CN132 from Sartomer; styrene maleic anhydride adducts (SMA) where the anhydride group of a styrene-maleic copolymer is reacted with a OH-functional monomer; acetoacetate-functional polymers such as acetoacetate-functional poly(vinyl alcohol) such as Gohsenx Z from Nippon Gohsei; acrylic emulsions such as those sold under the trade names Joncryl (BASF, Revacryl (Synthomer), Hycar (Lubrizol), Neocryl (DSM), Neboplast (Necarbo), and the Picassian AC range (Picassian Polymers); solution acrylics such as those sold under the trade names Joncryl (BASF); poly(meth)acrylic acid such as those sold under the trade name Sokalan (BASF; polyurethane dispersions such as those sold under the trade names Sancure (Lubrizol), Syntegra (Dow), Luplen (BASF, and Beetafin (BIP); polyester emulsions such as those sold under the trade names Eastek (Eastman); PVC Emulsions such as those sold under the trade names Vycar (Lubrizol); polyamide dispersions such as those sold under the trade names Casamid (Thomas Swann) and Hydrosize (Michelman); water-based alkyds such as those sold under the trade names Synaqua (Arkema); poly(vinyl alcohol) such as those sold by Kuraray, Nippon Gohsei & Celanese; polyethylene glycols; poly(vinyl pyrrolidones such as those sold under the trade names PVP-K15, K30, K60, K90 (ISP); maleic resins such as those sold under the trade names Hydrorez (Lawter); and natural resins such as water-based shellacs (Worlee, Procote (DOW), and Revertex (Synthomer).

The compositions of the invention may also include one or more surface control additives. Surface control additives are often optionally used to control the surface tension of the ink, which is required to adjust the wetting on the face plate of the printhead, and also to give the desired drop spread on the substrate, or, in the case of multi pass inkjet printing, wet on dry drop spread. They can also be used to control the level of slip and scratch resistance of the coating. Examples of suitable surface control additives include but are not limited to TEGO FLOW 300, 370, and 425, TEGO GLIDE 100, 110, 130, 406, 410, 411, 415, 420, 432 435, 440, 482, A115, and B1484, TEGO GLIDE ZG 400, TEGO RAD 2010, 2011, 2100, 2200N, 2250, 2300, 2500, 2600, 2650, and 2700, TEGO TWIN 4000 and 4100, TEGO WET 240, 250, 260, 265, 270, 280, 500, 505, and 510 and TEGO WET KL245, all available from Evonik. Available from BYK are BYK 333 and 337, BYK UV 3500, BYK 378, 347 and 361 BYK UV 3530 and 3570, CERAFLOUR 998 and 996, NANOBYK 3601, 3610, and 3650, and CERMAT 258. Available from Cytec are EBECRYL 350 and 1360, MODAFLOW 9200, and EBECRYL 341. From Sartomer the aliphatic silicone acrylate CN9800 may be used. Surfynol104, 420, 440, 465, 485, 61, 82, and 2502 are available from Air Products. Multiwet BD, EF, SU, SO, and VE are available from Croda. Capstone FS-30, 31, 34, 35, 50, 51, 60, 61, 63, 64, 65, and 3100 are available from Du Pont.

Since the compositions of the current invention are water-based in nature, it may also be preferable to include a biocide or anti-mould agent. Suitable examples include products based on the following biocide structural types: benz-isothiazolinone, bromo-nitro-propanediol, isothiazolinone, ethylenedioxydimethanol, or iodo-propynyl butyl carbamate, which are marketed under the trade names Intercide (Akcros Chemicals) or Nipacide (Clariant). Other types ofbiocide that could be considered include sodium dehydroacetate (Geogard 111 S from Lonza, sodium benzoate (Vancide 51 from R. T. Vanderbilt), sodium pyridinethiol-l-oxide (Sodium Omadine from Arch Chemicals), sodium salt of o-phenylphenol (Dowicide A from DOW Chemical) and ethyl p-hydroxybenzoate (Nipastat Sodium from Aako). These are preferably used at an amount of 0.01 to 1.00% by mass in the composition.

Defoamers can also optionally be included in the compositions of the invention; these prevent the formation of foam during manufacture of the ink and also while jetting. Defoamers are particularly important with recirculating printheads. Examples of suitable defoamers include TEGO FOAMEXN, FOAMEX 1488, 1495, 3062, 7447, 800, 8030, 805, 8050, 810, 815N, 822, 825, 830, 831, 835, 840, 842, 843, 845, 855, 860, and 883, TEGO FOAMEX K3, TEGO FOAMEX K7/K8 and TEGO TWIN 4000 available from Evonik. Available from BYK are BYK-066N, 088, 055, 057, 1790, 020, BYK-A 530, 067 A, and BYK 354. The additives DC62, DC65, DC 68, DC71 and DC74 are available from Dow Coming. Agitan 120, 150, 160, 271, 290, 298, 299, 350, 351, 731, 760, 761, and 777 are available from Munzing. Surfynol104PA, AD01, DF-llO, DF-58, DF-62, DF-66, DF-695, DF-70, and MD-20 are available from Air Products.

The compositions of the invention may also include one or more rheology modifiers. Rheology modifiers are organic or inorganic coating additives that control the rheological characteristics of the liquid formulation. In coatings technology, rheology modifiers are mainly used to provide either pseudoplastic or thixotropic properties. These can be divided into inorganic and organic materials; inorganic additives are typically clays, and fumed silicas, whereas organic materials can be subdivided into natural materials such as cellulosics/xanthin gum and synthetic materials which are then associative or non-associative type materials. Natural and synthetic rheology modifying agents have been used in water-based curable inks. For example, EP 1464686, US 2010/041816, and WO 2011/079402.

Whilst the compositions of the invention are water-based, in some embodiments a minor amount of co-solvent can be present. In some embodiments, the co-solvent is miscible with the water. In some embodiments the co-solvent is miscible with water at the at least one particular temperature in the range of 20°C to 60°C. In some embodiments, the co-solvent is selected to provide a reduced vapour pressure relative to water at the at least one particular temperature in the range of 20°C to 60°C. In some embodiments, the co-solvent is selected from the group consisting of ethylene glycol, diethylene glycol, propylene glycol, glycerol, PEG 400, N-methyl pyrrolidone, and mixtures thereof. In various embodiments, the co-solvent constitutes less than 5, 4, 3, 2, or 1 wt.% of the composition. In one embodiment, there is the proviso that there is no organic solvent or co-solvent present in the composition.

The compositions can be further formulated with additions of other filler components such as poly vinyl alcohol (optionally in solution), water soluble cellulose ethers, polyvinyl pyrrolidine, modified starches, urea, etc. The compositions may still further comprise a dissolved metal species, such as an ion or aqueous complex of an ion of Al, Zn, Ba, Ca, or Mg. The dissolved metal species may be provided in any suitable form, e.g., provided as a soluble metal salt (such as a chloride, sulfate, nitrate, carbonate, phosphate, acetate, etc.) or as a salt that may be solubilised in water by pH modification, such as a metal oxide or hydroxide. In one embodiment, the dissolved metal species is solubilised zinc oxide, and the zinc oxide is solubilised by addition of sodium hydroxide. The compositions may still further comprise water-based urethanes, styrene/maleic anhydride (SMA) resins, zinc acrylate, zinc oxide soluble resins, etc.

### Composition Properties

The compositions of the present invention may be formulated to have any suitable viscosity. The skilled person will appreciate that the application method of the ink, coating or primer will influence the target viscosity of the composition. Generally, the compositions of the invention preferably have a final viscosity of between 50 and less than about 800 mPa.s (Cp) at room temperature (25°C). If anilox and roller coating is to be used to deliver the primer, ink or coating, then the viscosity of the composition is advantageously adjusted to be, or is, between 200 and 600 Cp, e.g., between 200 and 350 Cp, or between 300 and 450 Cp, or between 400 and 600 Cp, or of about 200, 250, 300, 350, 400, 450, 500, 550 or 600 Cp at 25°C. If spray coating is to be used to deliver the primer, ink or coating, then the viscosity of the composition is advantageously adjusted to be, or is, between 20 and 50 Cp, for example, between 20 and 35 Cp, or between 30 and 45 Cp, or between 25 and 50 Cp, or of about 20, 25, 30, 35, 40, 45, or 50 Cp at 25°C. For inkjet printing applications, in order for the ink to be discharged properly from the nozzle of an inkjet printhead without clogging, the composition may be adjusted so as to have a viscosity of below 50 Cp Accordingly, the viscosity of the composition, when formulated for inkjet printing, is advantageously adjusted to be, or is, between 1 and 50 Cp, for example, between 1 and 15 Cp, between 10 and 25 Cp, between 20 and 35 Cp, or between 30 and 45 Cp, or between 25 and 50 Cp, or of about 1, 2, 5, 10, 15, 20, 25, 30, 35, 40, 45, or 50 Cp at 25°C. Accordingly, the composition in accordance with the present invention maybe modified such that a viscosity of the ink composition at a temperature of 25°C is at most 50 cP. The compositions of the present invention, when formulated for application by inkjet printing, preferably have a viscosity substantially lower than what currently commercially available inkjet inks or coatings can achieve without prior heating above 22°C.

The viscosity of compositions described herein can be modified or reduced, if required, by dilution with water, although other methods of modifying the viscosity will be known to those in the art.

In some embodiments, the compositions described herein are curable by application of UV or EB radiation, and do not require pre-treatment with IR or heat. In some embodiments, the compositions described herein are curable by application of UV radiation. In other embodiments, the compositions described herein are curable by application of electron beam (EB) radiation. Whilst the compositions of the invention may be cured with a heat source such as IR, this is important only for commercial convenience of inkjet presses already fitted with IR drying facilities. Indeed, the monomers in the compositions described herein may advantageously react upon curing under UV or EB radiation in an exothermic manner, where the heat generated by the chemical reaction is sufficient to evaporate some or all of the water in the composition from the cured composition surface.

Preferably the curable composition cures exothermically and provides a sufficient release of heat to reduce the water content of the composition. Preferably the composition cures to a substantially water insoluble composition, wherein water is expelled from the composition upon curing. Preferably the heat of polymerisation is sufficient to substantially drive off any water such that the cured composition is substantially dry after curing is complete. In one embodiment, there is the proviso that no heat is applied to evaporate any water present in the composition.

### Primers, Coatings and Inks

The compositions described herein may be formulated for specific application as a primer, coating or ink. The skilled person will be aware that primers, coatings and inks may comprise different additional components according to the application method, curing mechanism and function. For example, it will be understood that:
- compositions for UV curing will be formulated with an appropriate photoinitiator or polymerisation catalyst,
- compositions for EB curing may be devoid of photoinitiator, polymerisation catalyst and/or thermal initiator;
- compositions for IR curing will be formulated with an appropriate polymerisation catalyst and/or thermal initiator.

It will be further understood that:
- compositions, when formulated as primers, will be devoid of dyes and pigments;
- compositions, when formulated as coatings, may comprise dyes and/or pigments if the substrate requires tinting;
- compositions, when formulated as inks, will comprise a dye, or a pigment, or in some embodiments, will comprise a dye and a pigment.

### Cured Films

The compositions of the present invention are curable. Upon curing, the compositions polymerise and form an ink or toner receptive film. The cured film formed by the compositions of the invention may have a thickness of between about 3 and about 6 µm. For example, the cured film formed by the compositions of the invention may have a thickness of between about 3.0 and 4.0 µm, or between 4.0 and 5.0 µm, or between 5.0 and 6.0 µm, or between 3.0 and 4.5 µm, or between 4.0 and 5.5 µm, or between 4.5 and 6.0 µm, e.g., s thickness of 3.0 µm, 3.5 µm, 4.0 µm, 4.5 µm, 5.0 µm, 5.5 µm, or 6.0 µm.

The cured films formed by the compositions of the invention are preferably waterproof or substantially water resistant.

The compositions described herein may be adapted to deliver a friction-adjustable glossy surface finish to a substrate after curing. The friction may be provided by a roller rotating in opposition to the machine direction, such as a stainless steel, compressed cardboard or fabric surface roller.

### Radiation Source

The compositions of the present invention are preferably radiation curable. The radiation or energy source used for achieving polymerization and/or crosslinking of the curable functionality is preferably actinic, including radiation having a wavelength in the ultraviolet (UV) or visible region of the spectrum, accelerated particles (e.g. electron beam (EB) radiation), thermal (e.g. heat or infrared radiation (IR)), or the like. Use of actinic radiation enables excellent control over the initiation and rate of polymerization and/or crosslinking. Additionally, actinic radiation can be used for curing at relatively low temperatures. This avoids degrading or evaporating components that might be sensitive to the relatively high temperatures that might be required to initiate polymerization and/or crosslinking of the energy curable groups when using high temperature curing techniques. Suitable sources of curing energy include lasers, electron beams, mercury lamps, xenon lamps, carbon arc lamps, tungsten filament lamps, sunlight, low intensity ultraviolet light (UV), LED UV, UV laser light, and the like. The UV radiation may have a wavelength of between 370 and 410 nm, and more preferably, a wavelength of between 360 and 395 nm.

Preferably, the compositions of the invention are cured by UV or EB radiation, and still more preferably, are cured by UV or EB radiation without applying heat. Accordingly, in some embodiments, the compositions disclosed herein are aqueous, radiation curable coating or inkjet ink compositions, and in preferred embodiments, are aqueous, UV or EB radiation curable coating or inkjet ink compositions.

### Substrates

The primers, coatings and inks of the present invention can be formulated to provide excellent adhesion to a wide range of substrates. Any suitable substrate may be used. For example, suitable substrates may include synthetic materials including woven or non-woven materials. Examples of synthetic materials include polymeric materials, (flexible) polymer films, three-dimensional plastic objects (including rigid and flexible 3D plastic objects), glass, metals and/or alloys, composite materials, synthetic resin surfaces, textiles and fabrics such as nylon/polyamide, viscose, rayon, acetate, acrylic, polyester, lyocell, modal, spandex, modacrylic, olefin, aramids, etc. Examples of natural materials include plant based textiles (e.g., hemp, cotton, rice, nettle, flax, jute, modal, bamboo, lyocell, straw), animal based textiles (e.g., wool, silk), parchment (including vellum), and paper, paperboard, and cardboard products, including papers derived from wood pulp, including printing papers, wrapping papers (including kraft paper), writing paper (e.g., ledger, bank, and bond paper), blotting papers, drawing papers (including cartridge paper), handmade papers (including decorative papers, Ingres papers, Japanese paper and tissues), specialty papers (such as industrial papers, cigarette paper), wallpaper, coated paper, book paper, inkjet paper, chromatography paper, photography paper, card, etc. In one embodiment the substrate comprises a supporting web comprised substantially of a web of dewatered cellulosic fibres. In another embodiment the substrate comprises a web of nonwoven polymeric fibres. In yet another embodiment the substrate is a polymeric film. In a further embodiment, the substrate is one or more surfaces of a three-dimensional plastic object.

The primer and coating compositions described herein may advantageously modify the surface of a non-porous substrate, such as a polymeric film, such that it is subsequently receptive to water-based inks, of both the conventional kind and a kind according to the present invention. The primer and coating compositions described herein may advantageously modify the surface of a porous substrate, such as lightweight paper, such that ink show-through is reduced or eliminated compared to an untreated substrate. The primer and coating compositions described herein may also advantageously modify the surface of a porous substrate such that it becomes more receptive to a water-based ink. The primer and coating compositions may further advantageously modify one or more surfaces of a three-dimensional polymeric object, such as a bottle, so as to enable direct printing thereon. The primer and coating compositions may still further advantageously modify the surface of a substrate so as to impart a desired finish, e.g., satin or gloss, without the need for conventional calendering at the paper mill.

The compositions described herein thus advantageously extend the range of substrates to which conventional water-based coatings and inks can be applied successfully. Without wishing to be bound by theory, the water content of the inventive compositions may allow more of the pigment and/or dye, when present, to remain on the surface of the substrate than can be achieved with conventional water-based inkjet inks. This results in a potential 20% to 50% reduction, depending on the particular colour and the substrate, in the amount of ink required to maintain print colour saturation/densities. In addition, the primers, coatings and inks of the invention may achieve a degree of gloss on otherwise porous substrates and may simultaneously reduce or eliminate show-through from one side of the substrate to the other when printing on lightweight papers such as Bible papers and newsprint.

### Application of primers, coatings and inks

Disclosed herein is a method for coating a substrate to prepare a printable surface, the method comprising the steps of: applying an aqueous, curable coating composition as described herein onto a substrate; and curing the aqueous, curable coating composition to thereby provide said printable surface.

Preferably, no initial heating step is required for removing some or all of the water in the composition or for curing the composition. The printable surface is preferably an inkjet ink printable surface, but can also be a Liquid Electro Photographic Toner (LEP), a Dry Toner (Xerography), or an oil-based inkjet commercial printing system printable surface.

The compositions of the invention can be applied to a substrate in any suitable manner. When formulated as inkjet inks, compositions as described herein are suitable for application by inkjet printing. Examples of suitable commercial inkjet printers are given I the section entitled 'Printing Press'. When formulated as primers or coatings, suitable application methods for compositions described herein may include single pass inkjet printing, spray coating, curtain coating, Mayer bar, flexographic, gravure, blade coating, anilox and roller coating. Accordingly, the primers and coatings of the invention as described herein are suitable for a range of digital printing technologies, including (but not limited to) inkjet, HP Indigo, Landa Nanographic and other wet and dry toner systems. As noted above, the viscosity of the composition, as well as the additional components included in the composition, may be tailored by one of skill in the art, for a specific application method. As also noted above, the primers and coatings may advantageously improve the surface of a substrate, e.g., by modifying the surface characteristics (satin or glossy), and/or by rendering the surface more receptive to ink or toners.

The compositions of the invention may be applied to a substrate or surface thereof at any suitable density. For example, a suitable application density (in composition weight per unit area) may be between 1 g/m².and 20 g/m². For example, the application density may be between about 1 and 5 g/m², or between about 5 and 10 g/m², or between about 10 and 15 g/m², or between about 15 and 20 g/m², or about 1, 2, 3, 4, 5, 6, 7, 8, 9, 10, 11, 12, 13, 14, 15, 16, 17, 18, 19, 20 or 25 g/m². If cured with UV radiation, coating weights of between about 1 and 10 g/m².may be used. If cured with EB radiation, application densities of between about 1 and 20 g/m².may be used.

The wherein the curing is preferably complete or substantially complete, and/or the printable surface is preferably printable at line speeds in the range 30 m/minute - 600 m/minute, for example, at line speeds of between 30 m/minute - 200 m/minute, between 200 m/minute - 400 m/minute or between 400 m/minute - 600 m/minute.

Also disclosed herein is method of preparing a primer coating on a substrate, the method comprising the steps of: applying a solution of sodium and/or ammonium (meth)acrylate onto said substrate; and polymerising the sodium and/or ammonium (meth)acrylate *in situ.* The sodium and/or ammonium (meth)acrylate may be polymerised by exposure to UV, EB or IR energy, and preferably, the primer coating adheres to the substrate. Preferably, water will be absorbable into the primer coating such that inkjet printing can be undertaken on the primed substrate at line speeds of 30m/minute to 600m/minute, for example, at line speeds of between 30 m/minute - 200 m/minute, between 200 m/minute - 400 m/minute or between 400 m/minute - 600 m/minute.

Further disclosed herein is a method for producing a substrate having a coating thereon whereby the gloss level of said coating is controllable to a predetermined level, the process comprising the steps of: applying a coating composition as described herein onto said substrate; polymerising said coating composition to produce a cured coating; and buffing the surface of said cured coating sufficiently to achieve said predetermined gloss level. The buffing step may be achieved by contacting the surface of the coating with a roller rotating in a first direction and moving the substrate with respect to the roller in the opposite direction to the first direction. The roller may be any suitable roller, such as a stainless-steel roller, compressed cardboard roller or a fabric covered roller.

### Printing Press

Described herein is an inkjet printing press comprising: a coating means for applying a coating according to the invention onto one or both sides of a substrate to be coated; means to cure said coating(s) to produce a coated printable substrate; and means to print onto said coated printable substrate. The printing means may utilise an inkjet ink as described herein, or a commercially available inkjet ink such as HP ink, Canon ink, or Epson ink. The coating means may be selected from gravure, roller coating, anilox, curtain coating, blade coating, spray bar or Mayer bar.

Although it is standard practice in the art to treat a substrate such as paper at the time of manufacture of the paper, the primers and coatings of the invention as described herein advantageously enable surface treatment of a paper substrate (and also other substrates as described above) at the commencement of and as a part of a printing operation. Accordingly, described herein is a printing press having a front-end design that can be incorporated into existing press lines, or designed into new press lines. Suitable commercial presses for use in combination with the front-end press design described herein may include Inkjet presses such as Fuji Xerox FX 1400, Canon Océ Colour Stream 3700, RISO ComColour XI, KBA RotaJet 76, and Dainippon Screen Screen TruePress Jet 520ZZ; HP Indigo presses such as HP Indigo 5000 and HP Indigo 7000; Offset presses such as manroland newspaper press running offset UV inks and manroland newspaper press running cold-set offset inks; and Coating units such as Rotamag Qantum 8/340 manufactured by Rotary Engineering Pty Ltd and Agfa Dotrix. The inkjet printing press may be a web-fed press, or it may be a sheet-fed press.

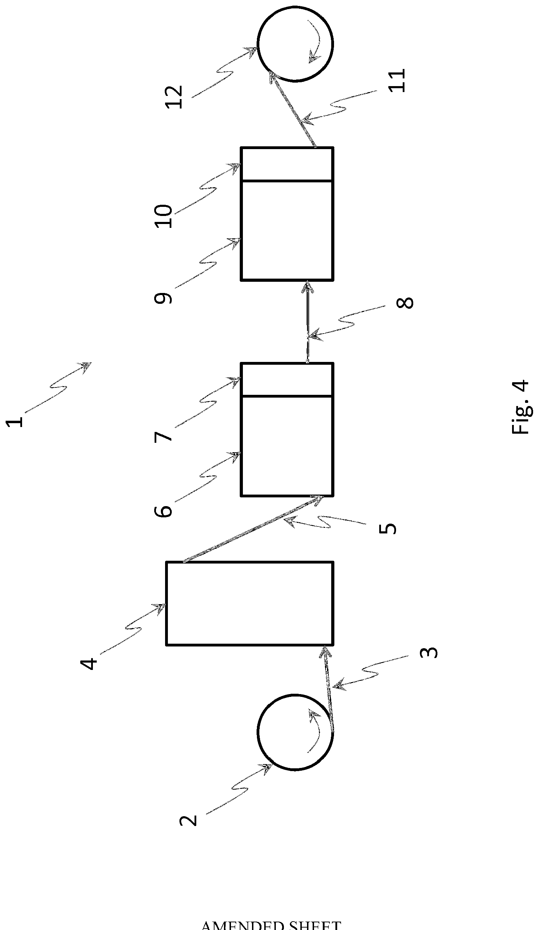

Embodiments of the design of this printing press are illustrated diagrammatically in Figures 4, 5 and 6.

Turning to Figures 4 to 6, Figure 4 is an illustration of an inkjet press line 1 with priming/pre-coating using water-based radiation curable inks/coatings. The line 1 comprises an unwind reel 2 having a reel of substrate 3, which in one embodiment is cellulose paper. The substrate 3 is fed into a coating tower 4 having UV or EB curing and reverse rotating buffing rollers (not shown) which can be engaged or not engaged depending on the finish required on the substrate. The coating (or primer) is preferably selected from the coatings of the invention and as per described in the examples above. The coated (or primed) paper substrate 5 is fed into a first inkjet print unit 6 for printing a first side of the substrate using inks of the present invention. A first curing station 7 comprising UV lamps or LED UV or EB then cures the applied ink(s). The printed paper substrate 8 is fed into a second inkjet print unit 9 for printing a second side of the substrate using inks of the present invention. A second curing station 10 comprising UV lamps or LED UV or EB then cures the applied ink(s). The coated and printed substrate 11 is then wound onto a receiving re-wind reel 12.

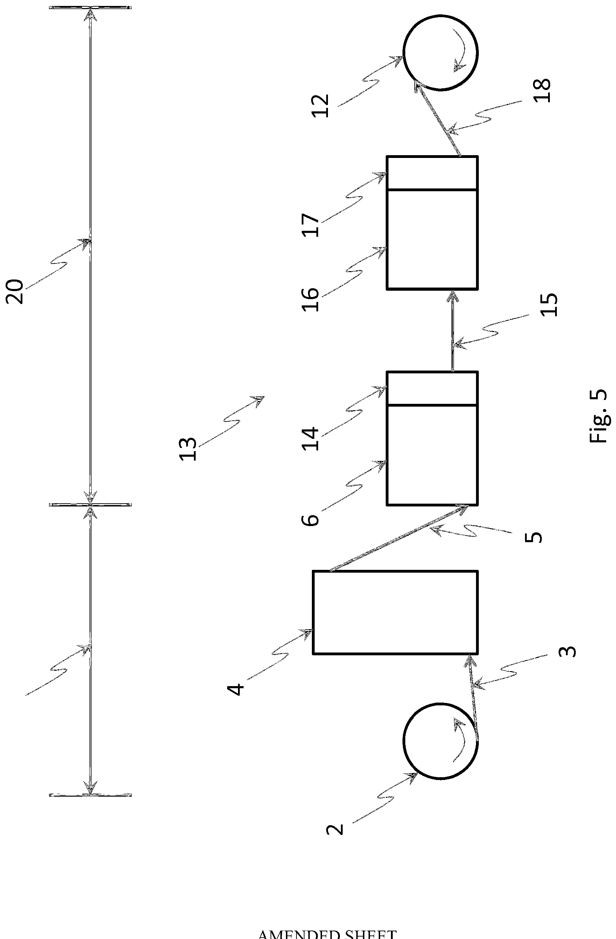

Figure 5 is an illustration of an inkjet press line 13 with priming/pre-coating utilising conventional inkjet inks/coatings. The line 13 comprises an unwind reel 2 having a reel of substrate 3, which in one embodiment is cellulose paper. The substrate 3 is fed into a coating tower 4 having UV or EB curing and reverse rotating buffing rollers (not shown). The coating (or primer) is preferably selected from the coatings of the invention and as per described in the examples above. The coated (or primed) paper substrate 5 is fed into a first inkjet print unit 6 for printing a first side of the substrate using conventional inks. A drying station 14 comprising IR or NIR drying unit dries the conventional ink(s). The coated and printed paper substrate 15 is fed into a second inkjet print unit 16 for printing a second side of the substrate using conventional inks. A second drying station 17 comprising IR or NIR drying units dries the conventional ink(s). The coated and printed substrate 18 is then wound onto a receiving re- wind roller 12. The first portion of the process (19) can be an additional unit operation, and the second portion (20) can be an existing conventional printing press, inkjet press, or other modality.

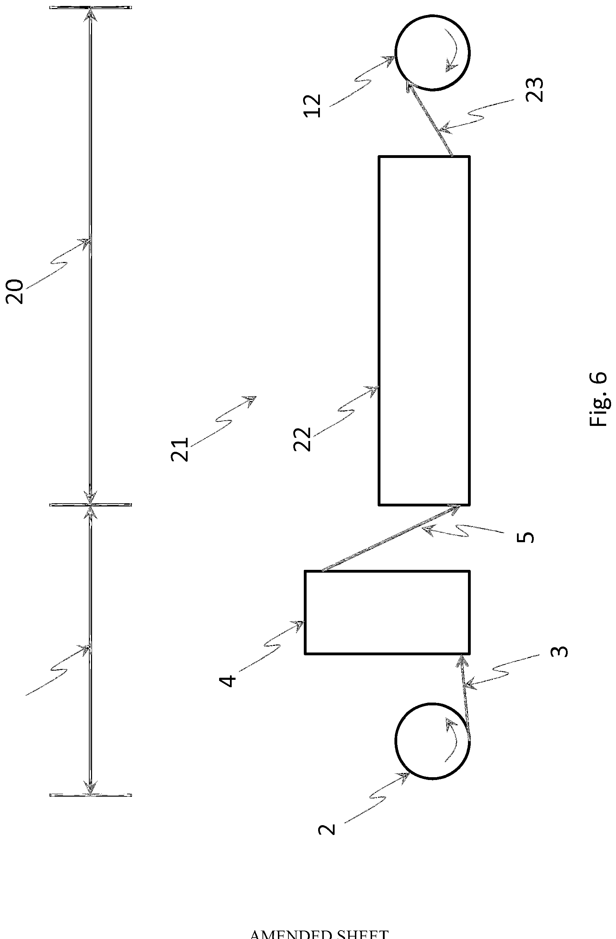

Figure 6 is an illustration of a modified liquid electrophotographic toner (LEP) system or HP Indigo digital press line 21 with priming/pre-coating. The line 21 comprises an unwind reel 2 having a reel of substrate 3, which in one embodiment is cellulose paper. The substrate 3 is fed into a coating tower 4 having UV or EB curing and reverse rotating buffing rollers (not shown). The coating (or primer) is preferably selected from the coatings of the invention and as per described in the examples above. The coated (or primed) paper substrate 5 is fed into a generic liquid electrophotographic toner (LEP) system or HP Indigo digital press line or Landa Nanographic press line 22. The coated and printed substrate 23 is then wound onto a receiving re-wind reel 12.

Referring to Figures 4, 5 and 6, whilst it will be understood that the embodiments depicted include an unwind reel 2 having a reel of substrate 3 (i.e., web-fed presses), it will be understood that the unwind reel 2 having a reel of substrate 3 may be substituted by a stack of flat, pre-cut sheet material (i.e., a sheet-fed press). Alternatively, it will be understood that the unwind reel 2 may have a reel of substrate 3, but the printing press may include a roll sheeter unit for cutting the reel of substrate 3 prior to the substrate being fed into the coating tower 4 or inkjet print unit 6 (i.e., a sheet-fed press with in-line roll sheeter).

Similarly, referring to Figures 4, 5 and 6, whilst it will be understood that the embodiments depicted include a re-wind reel 12, it will be understood that the re-wind reel 12 may be substituted by a sheeter or die cutter (in the case of web-fed presses). Alternatively, it will be understood that the re-wind reel 12 may be substituted by a stack of printed and/or coated sheet material (in the case of sheet-fed presses).

Using the printing press described herein, a low-grade or inexpensive substrate, such as a reel of paper or polymeric film, can be used to produce a high quality printed product by incorporating an in-line primer or coating application and UV/EB curing step. This in-line application/curing step can be performed at commercial press speeds, and the primed/coated substrate can then be printed in-line with the inkjet inks of the invention, and subsequently cured in-line to produce a high quality printed product. The priming/coating unit is compatible with different printing modalities, including high-speed commercial web inkjet presses, and the substrate can be sheetfed rather than web. Indeed, the front-end design of the press incorporating the priming/coating units and their respective radiation curing units can be fitted to any existing inkjet press line by retrofit or by incorporating into the press during manufacture.

Whilst existing primers for inkjet printing are solutions designed to maintain the essential haptic or look and feel of the original substrate and create no material change to those characteristics, the printing press described in this example, in combination with the coating compositions described herein, modifies the substrate surface. This process supersedes and greatly simplifies the current method for producing gloss coated paper stocks.

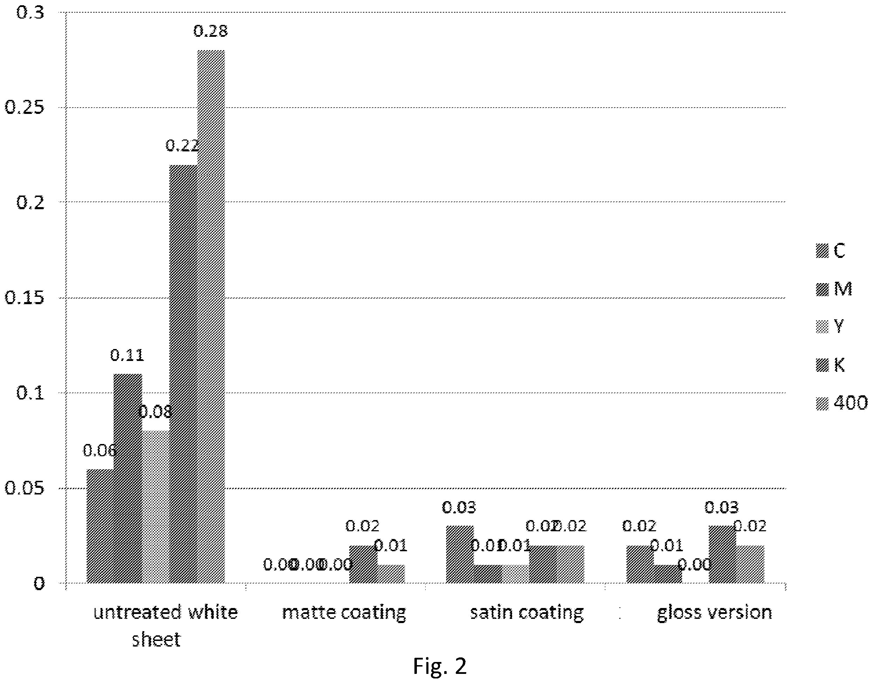

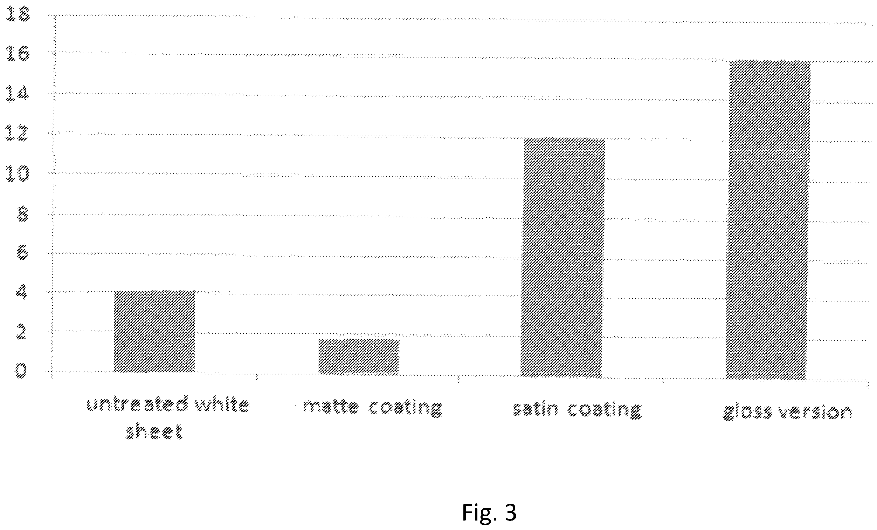

Advantages of the printing press described herein in combination with the primers/coatings of the invention may include any one or more of the following: firstly, this process can significantly increase gloss levels and reduce show-through of printed text and pictures from one side of the sheet to the other on thin papers such as Terbook TB 40, 40 g/m².paper and Bolloré PrimaPage New 34 g/m².relative to existing printing technologies. Show-through density measurements and gloss levels for the Bolloré PrimaPage New are shown in Figures 2 and 3 respectively for 4.5 g/m².coating weight applied to both sides of the sheet. Secondly, the coatings of the invention only add 1.5 µm to 2.5 µm to the thickness of a paper sheet, thereby keeping any increase in thickness of the paper sheets to a minimum, which is particularly desirable for large volumes of pages when bound into book format. Thirdly, when the primer/coatings of the invention are applied to a cellulosic substrate and cured with UV or EB radiation and subsequently printed in line with conventional water-based inkjet inks, the volume of ink required to maintain density is less than 80% of that required to print the same image or text with the same inks on the untreated said cellulosic substrate.

The inventive coating compositions of the present invention may provide various advantages, such as one or more of the following.
(i) The ability to cure the inks and coatings by UV or EB radiation without the need for any external heat, or the flexibility to cure thermally, such as with IR, with addition of a free radical catalyst.
(ii) Being solutions, the inks can be formulated with either pigment or dye colourants or, a combination of pigment and dye colourants in the same ink. Accordingly, the present invention provides additional flexibility compared to prior art coating compositions and inks Additionally, being able to formulate with combination of pigment and dye colourants in the same ink means that a wider range of colours and colour combinations are possible than to prior art coating compositions and inks. For example, ink formulations with a combination of pigment and dye colourants provide the widest colour gamut and the most transparent prints for the most vibrant colour rendition.
(iii) There are advantages to use of a water soluble composition compared to compositions relying on monomer or polymer emulsions. Emulsions will consist of micron size monomer or polymer particles which are hydrophobic and suspended in their water carrier. Water must be evaporated in these systems, and is not driven off by the polymerisation reaction.
(iv) The inks are water resistant when cured, and thereby solve a major problem of conventional dye-based water-based inkjet inks, which tend to be strongly affected by accidental liquid spillage on printed material such as newspapers or books.
(v) The inks of the invention, when cured, have a 30% - 40% lower film thickness than conventional 100% solids UV inkjet inks for the same quantity of applied ink, since the water content of the ink compositions of the invention is expelled on curing. The inks of the prior art create a Braille effect, which can be undesirable and is substantially ameliorated by the inks of the invention.
(vi) The inks of the invention provide low viscosity at 22°C, which is particularly suitable for commercially-available equipment, and do not require a heating step to be j ettable as an inkjet ink, as per conventional inks.
(vii) When used in conjunction with conventional water-based inks, the coatings of the invention enable a reduction of the required ink concentration in the range 20% to 30% to maintain colour density by comparison with printing with the same ink on uncoated cellulose fibre substrates.
(viii) The inks and coating compositions of the invention provide significant reduction of "show-through" of print on lightweight paper substrates, and facilitate colour printing, e.g., 4-colour printing, with inkjet these "thin paper" substrates which, up until now, have been limited to monochrome printing if they could be printed at all.
(ix) The coating compositions of the invention can provide up to 35% increase in tensile strength of low-grade lightweight papers, such as newsprint. A light coating of 2 g/m².each side of a 34 g/m² lightweight paper produces a 14% increase in tensile strength in the machine direction.
(x) The coating compositions of the invention can be used as 'additives' in the final stages of the papermaking process to provide surface finishes which are printable by digital toner and inkjet printing methods, as well as conventional printing methods of lithographic and flexographic printing.

### EXAMPLES

The present invention will now be described with reference to the following examples which should be considered in all respects as illustrative and non-restrictive.

### Example 1 - monomer suitable for primers/coatings

*Monomer preparation:* 29.0 g of acrylamide (0.4 mol), 12.3 g formaldehyde (in the form of 92% paraformaldehyde powder or in granular form; 0.4 mol) and hydroquinone monomethyl ether (Hqmme)(0.1%) as a polymerisation inhibitor were combined and the pH of the reacting powders adjusted to pH 8 with 0.1 g of a 25% aqueous sodium hydroxide solution. The resultant liquid mixture, forming *N*-methylol acrylamide, was heated to 75 to 80 °C and stirred at that temperature for 1h. An additional 29.0 g acrylamide (0.4 mol) was then added, and the resultant mixture stirred and cooled to 70 °C. Subsequently, 29.8 g glyoxal (provided in the form of 40% solids aqueous solution; 0.2 mol) was added and the resultant mixture stirred for 30 min to produce a monomer reaction mixture in water (40 wt%) comprising up to 73.3 g of the compound of Formula X, N-[[2,2-bis(prop-2-enoylamino)-1-[(prop-2-enoylamino)methoxy]ethoxy]methyl]prop-2-enamide (0.2 mol), as shown below:

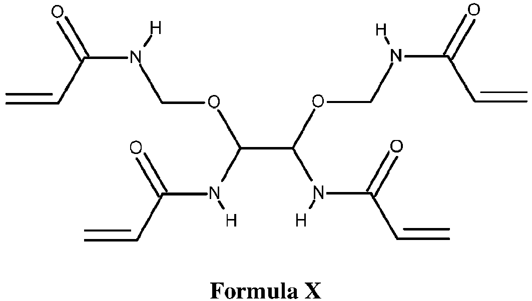

The monomer reaction mixture may further comprise one or more of the following compounds: 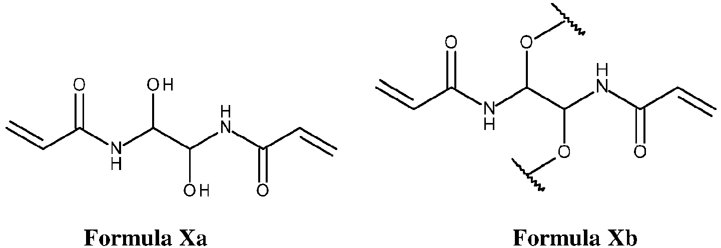 where each "∼∼∼" in Formula Xb may independently be -H or -CH₂NHC(=O)CH=CH₂.

100 parts of the monomer products of Example 1 contains between 16 and 25 % by weight water and the resulting solution has a final viscosity of approx. 30 cP at 22°C.

### Example 2 - monomer suitable for inkjet inks

*Monomer preparation:* 29.0 g acrylamide (0.4 mol) and 29.8 g glyoxal (provided in the form of 40% solids aqueous solution; 0.2 mol) were combined and reacted at 75 °C to produce *N*,*N*'-(1,2-dihydroxyethylene) bisacrylamide (DHEBA) (0.2 mol) in water. This 0.2 mol of DHEBA in water was subsequently combined at 75 °C with 57.7 g of 4-hydroxybutyl acrylate (4HBA) (0.4 mol) and reacted to produce the monomer of Formula XI, 4-[1,2-bis(prop-2-enoylamino)-2-(4-prop-2-enoyloxybutoxy)ethoxy]butyl prop-2-enoate: 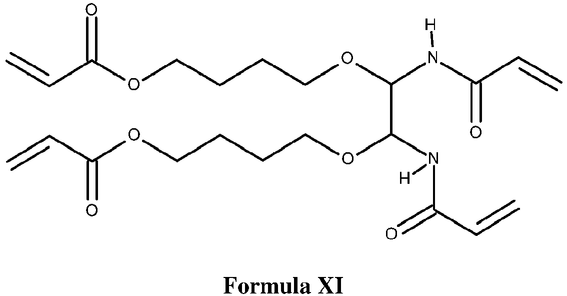 100 parts of the monomer products of Example 2 contains between 16 and 25 % by weight water and the resulting solution has a final viscosity of approx. 30 cPs at 22°C.

### Example 3: Radiation curable inkjet ink

A radiation curable inkjet ink was prepared according to the following table.

| **Component** | **% (w/w)** |
|---|---|
| Monomer solution (example 2) | 85 - 92 |
| photoinitiator (Irgacure 184 or Irgacure 2959) | 1.5 - 2.5 |
| photoinitiator - Daracur TPO | 0.5 - 1.5 |
| levelling & wetting agent (Byk346 or Dow Q25211) | 0.2 - 0.7 |
| Dye - eg. acid yellow 23 | 4.0-8.0 |

This inkjet ink had a viscosity of approximately 50 cPs. When contacted to paper and polymeric film substrates and cured using UV radiation the ink dries instantly, whereby firstly the monomer polymerises/crosslinks to a solid hydrophobic viscous gel and the gel dries through the heat generated by the chemical reaction to form a scratch-resistant glossy film that satisfies the standard industry tape test for adhesion (Standard Practice for Evaluating Ink or Coating Adhesion to Flexible Packaging Materials Using Tape, ASTM F2252-03 or equivalent).

### Example 4: Radiation curable inkjet ink

A radiation curable inkjet ink was prepared according to the following table.

| **Component** | **% (w/w)** |
|---|---|
| Monomer solution (example 2) | 64- 68 |
| 85% epoxy acrylate oligomer cut with 15% tripropylene glycol diacrylate (TPGDA) | 12- 15 |
| water | 16-18 |
| photoinitiator (Irgacure 184, 2959, or 1173) | 1.5-2.5 |
| photoinitiator - Daracur TPO | 0.5- 1.5 |
| levelling & wetting agent (Byk346) | 0.2 - 0.7 |
| Dye - eg. acid yellow 23 | 4.0-8.0 |

In one embodiment, the 85% epoxy acrylate oligomer composition was prepared as per US Patent No. 6,841,588.

This inkjet ink has a viscosity of approx. 25 - 30 cPs. When contacted to paper and polymeric film substrates and cured using UV, the ink dries instantly to form a scratch resistant glossy film which satisfies the standard industry tape test for adhesion (ASTM F2252-03 or equivalent).

### Example 5: General primer, coating or ink monomer synthesis

1 mol glyoxal (provided in the form of 40% solids aqueous solution) was combined with either 2 mol equivalents, 3 mol equivalents or 4 mol equivalents of a vinyl acrylate compound which contains an active pendant OH. Examples of suitable vinyl acrylate compounds are described elsewhere herein in the section entitled 'Monomers'.

For example, 29.8 g glyoxal (provided in the form of 40% solids aqueous solution; 0.2 mol) was combined with 115.4 g 4-hydroxybutyl acrylate (0.8 mol) and heated to 75°C then held at 75°C for 30 min, and then cooled to 25°C to produce the tetra-substituted monomer shown in Formula XII, 4-[1,2,2-tris(4-prop-2-enoyloxybutoxy)ethoxy]butyl prop-2-enoate.

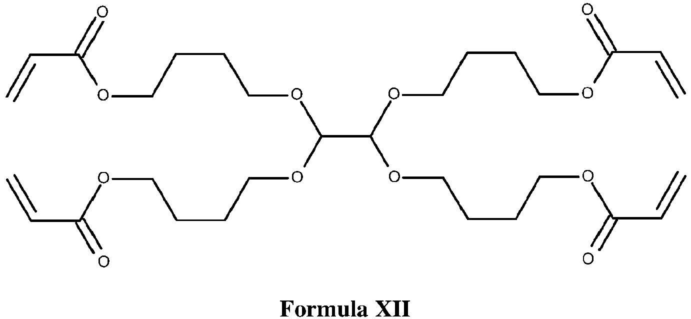

### Example 6: Radiation curable water based inkjet ink

### Example 6a: Base composition

| **Component** | **% (w/w)** |
|---|---|
| Epoxy resin (bisphenol A diglycidyl ether) (1 mole) | 16.3 |
| Diethanolamine (0.5 mole) | 1.4 |
| Acrylic acid (1 mole) | 2.3 |
| Monomer of Example 5 | 60.0 |
| Water | 20.0 |

Heat epoxy resin and diethanolamine together until exotherm up to 120°C, and then cool to 90°C. Add monomer of Example 5 and acrylic acid, followed by remaining water.

This Base contains up to 28% water.

### Example 6b: to produce an ink, add the following components to the base composition in Example 6a:

| **Component** | **% (w/w)** |
|---|---|
| Irgacure 184 | 2.5 |
| TPO | 0.5- 1.5 |
| Byk 346 | 0.2-0.7 |
| Water soluble dye | 4.0 - 10.0 |

### Final ink viscosity = 20-30 cP at 25°C

When contacted to paper and polymeric film substrates and cured using UV, the ink dries instantly to form a scratch resistant glossy film which satisfies the standard industry tape test for adhesion (ASTM F2252-03 or equivalent).

### Example 7: Water-based radiation curable dual-colourant ink

The following water-based curable yellow inkjet ink was prepared as:

| **Component** | **% (w/w)** |
|---|---|
| Genorad 16 Free radical scavenger | 0.1 |
| Monomer from Example 2 | 80.0 |
| Irgacur 2959 Photoinitiator | 2.0 |
| Daracur TPO Photoinitator | 1.0 |
| Byk 346 Wetting & levelling agent | 0.4 |
| Acid Yellow 23 Dye | 4.0 |
| Unisperse Jet Yellow Pigment dispersion (50% solids dispersion) | 10.0 |
| water | 2.5 |

When UV cured under a 300W per inch UV light source peaking at 365 nm, this yellow ink exhibited greater colour density, higher gloss and greater water resistance than a comparable ink prepared with only a dye colourant or a pigment.

This embodiment of the invention enables dual-colourant water-based UV inkjet inks which can have the proportions of the dye and pigment colourants adjusted to optimise the characteristics of the ink for particular printing applications.

### Example 8: HP Indigo ink primer composition

| **Component** | **% (w/w)** |
|---|---|
| Monomer (example 1) | 12-18 |
| Irgacure 184 (photoinitiator) | 1-4 |
| Water | 15-25 |
| Quantramine C 16/50 Cationic Surfactant | 0.5.3.0 |
| 25% Polyvinyl alcohol solution | 10-15 |
| Antifoam | 0.2-0.5 |
| Calcium carbonate | 30-35 |
| Kaolin Clay | 8-12 |

Viscosity = Brookfield RVT Viscometer 4/100/25°C; 300 - 500 cP.

There is a lack of availability of suitable "primers or coatings" in the prior art tailored to enable the printability of conventional water based ink jet inks and Liquid Electro Photographic Toners (LEP) on many substrates. Owing to the diverse physical surface properties presented by various substrates, inks in many cases are known to require a treatment with a coating or primer to interface between the inkjet ink or toner and the substrate in order to successfully wet, level or adhere adequately to those surfaces.

It has been surprisingly found that the composition of Example 8 can render a coated substrate surface receptive to some digital toner-based printing systems such as HP Indigo as well as Xerographic digital printing systems used in Ricoh presses and oil-based inkjet systems used by manufacturers such as RISO of Japan. Evaluation trials carried out on commercial digital presses including HP Indigo 5000 and 7000 and Ricoh C7100 produced excellent printed results on paper substrates which, prior to coating with the composition of Example 8, were not suitable for printing with these particular presses. These results are in addition to the excellent printing results obtained on commercial inkjet presses including Fuji Xerox FX 1400, Canon Oce Colorstream 3700 and RISO 7150 on paper substrates, which were previously difficult or impossible to print on or created unacceptably high levels of show-through on lightweight papers.

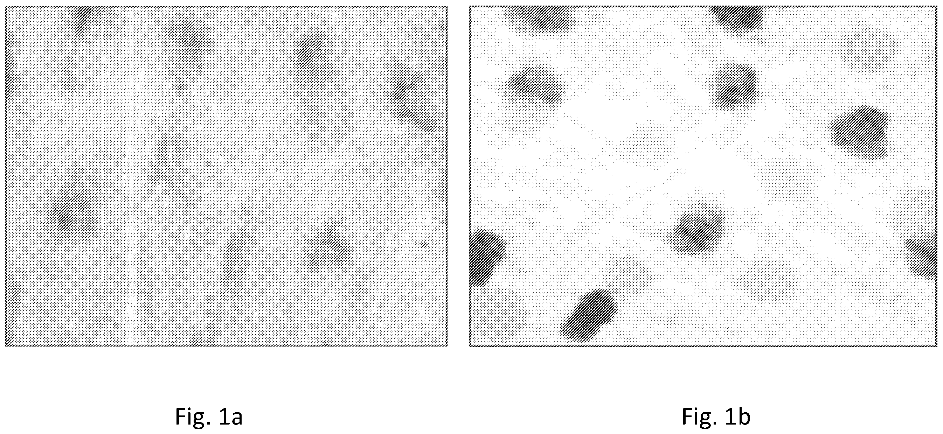

In the case of both the digital toner printing and inkjet printing, in addition to the excellent printing results, a commercial standard of adhesion was achieved as measured by the universal "tape test" method employed by the printing industry. Independent print experts have also judged the printed results as being of higher quality than that achieved prior to application of the composition of Example 8 due to the sharper dot definition of the inks created by the coating as illustrated in Figure 1, which shows NorNews 42 gsm newsprint from Norwegian company Norske Skog at x400 magnification. Figure 1a shows conventional 4-colour printing on uncoated paper, and Figure 1b printing on paper coated with the composition of Example 8. It is apparent that the printing is significantly sharper on the coated substrate, whereby the printed dots retain clear edges and do not blur or run, or wick into the substrate. Further, the colour remains bright and vivid, whereas the uncoated paper has retained only a fraction of the colour density.

### Example 9: Semi-matte primer/coating

| **Component** | **% (w/w)** |
|---|---|
| Composition of Example 1 | 12-18 |
| Irgacure 184 | 1-4 |
| Water | 14-20 |
| Organic hollow sphere polymeric pigment (e.g., Ropaque^{®}) | 15-25 |
| 25% Poly Vinyl Alcohol Soln | 3-8 |
| Antifoam | 0.2-0.6 |
| Calcium Carbonate | 32-40 |
| Kaolin | 3-8 |
| Purple Dye Soln. | 0.1-0.4 |
| Optical brightener | 0.2-0.6 |

The formulation in the table above is intended for application by gravure, roller coating and Mayer Bar.

### Example 10: Gloss primer/coating

| **Component** | **% (w/w)** |
|---|---|
| Composition of Example 1 | 12-18 |
| Irgacure 184 | 1-4 |
| Urea | 1-4 |
| Organic hollow sphere polymeric pigment (e.g., Ropaque^{®}) | 50-70 |
| 25% Poly Vinyl Alcohol Soln | 8-14 |
| Antifoam | 0.1-0.5 |
| Ethylene Vinyl Acetate Pol Emulsion | 3.0-7.0 |
| Water | 0.4-5.0 |
| Optical brightener | 0.2-0.5 |

The above formulation is intended for application by gravure, roller coating and Mayer Bar.

The gloss level of the coating in Example 10 can be varied substantially on-press by buffing the coating after curing with a polished stainless steel roller driven in the opposite direction to the machine direction. The level of gloss achievable on the coating is broadly proportional to the rotational speed of this reverse driven roller. When used in combination with the printing press design of the present invention, this coating allows the press operator to precisely control the level of gloss to preset levels prior to the in-line printing.

### Example 11: Sodium acrylate primer

Certain substrates, including some papers and polymeric films, may not be printable by both conventional water based inkjet and/or digital print methods. This may be due to inadequate adhesion of digital inks or toners to the substrate surface as required by commercial standards.

The most challenging of these is air-dry water-based inkjet ink printed on polymeric films due to the non-absorbency of the impervious polymeric film substrates and the typically high water content of the inks. Accordingly, there exists strong commercial demand for airdrying water based inkjet inks to be printable directly onto clear or opaque film substrates i.e., onto non-porous impervious plastic films, and more particularly, to be printable with curing speeds matching the normal printing speeds of current and immediate future generation commercial inkjet printing presses. Additionally, some applications require the substrate and primer to remain clear and transparent after the primer or coating application.

**Base composition Example 11a:**

| **Component** | **% (w/w)** |
|---|---|
| 25 % NaOH | 52 |
| Acrylic Acid | 48 |

**Primer composition Example 11b:**

| **Component** | **% (w/w)** |
|---|---|
| Base composition Example 11a | 77.30 |
| Aliphatic epoxy acrylate oligomer (Laromer^{®} LR 8765) | 19.60 |
| Irgacure 184 (photoinitiator) | 1.00 |
| butylated hydroxytoluene | 0.10 |
| BYK 346 (levelling/wetting agent) | 0.60 |
| Quatramine C 16/50 (levelling/wetting agent) | 1.40 |

When the composition of Example 11b is contacted to a polymeric film (such as PVC or Mylar), and UV cured it dries instantaneously to a clear glossy film. This is then printed with conventional air dry water-based Epson inkjet inks on an Epson WF 3640 from whence the printed material emerges completely dry at normal print speeds. Subsequent testing indicates the print quality and adhesion being of commercial standard according to various standard industry tests. Without being bound by theory, the Applicant believes that sodium polyacrylate formed upon curing this composition readily absorbs carrier water/solvent from applied water-based air-dry inkjet inks and thereby allows conventional ink printing on a previously unsuitable polymeric surface. The composition of Example 11b can also be applied with good results to cellulosic fibre substrates which exhibit poor absorption characteristics.

### Example 12: Metal oxide primers/coatings

| | **Example 12a** | **Example 12b** | **Example 12c** |
|---|---|---|---|
| **Component** | **% (w/w)** | **% (w/w)** | **% (w/w)** |
| 25% NaOH soln | 53 | 42 | 24 |
| ZnO | 5.0 | 10 | 20 |
| Acrylic acid | 40 | 48 | 56 |
| 25% ammonium hydroxide solution | 2.0 | - | - |
| Photoinitiator | 1-3 | 1-3 | 1-3 |
| Viscosity (Brookfield RVT # 4/100 at 25°C) | 50 cP | 105 cP | 400 cP |

The above examples form water clear solutions and the viscosity increases with increased proportions of ZnO. The rate of cure becomes more pronounced with increased concentration of ZnO. Additionally, the cured films become harder with increasing ZnO concentration, to the point of near brittleness with 20% of ZnO.

When contacted to polymeric film surfaces and UV cured, compositions of Examples 12a-c polymerise and provide receptive surfaces for conventional inkjet inks which air-dried almost instantaneously on the subject surfaces with good adhesion and gloss using Epson inks on an Epson WF 3040 inkjet printer. When formulated without pigments or fillers, they remain clear and transparent. The cure speed, hardness and scratch resistance of the ink surfaces increased in proportion to the percentage of zinc content. The compositions of Examples 12a-c can be applied by inkjet or other conventional means such as gravure, flexographic, Mayer bar, spray application, etc.

Examples 12a-c can be applied by inkjet printing (if the compositions are diluted with water to suitable viscosity). Other application modes can also be used, such as gravure, flexographic, Mayer Bar, or spray application.

### Example 13: Printing press

Table 1 shows the reduction in inkjet ink volume required after coating (Independent measurement by Dainippon Screen - Japan).

| **Table 1** | | | | |
|---|---|---|---|---|
| **Colour** | **Ink Usage before coating (vol)** | **Ink Usage after coating (vol)** | **Difference** | **% Reduction** |
| c | 8.9924 | 7.1016 | 1.8908 | 21.03% |
| M | 19.2205 | 18.6379 | 0.5826 | 3.03% |
| Y | 18.123 | 19.0244 | -0.9014 | -4.97% |
| K | 26.3277 | 15.5474 | 10.7803 | 40.95% |
| Weighted Average | | | | 20.45% |

The Applicant has also surprisingly found that the application of as little as 2.0 g/m² of the compositions of the invention, for example the coating of Example 8, to each side of Terbook TB 40, 40 g/m² lightweight paper, increases the tensile strength of the paper in the machine direction by 14% after curing with UV.

When used in combination with the compositions of Examples 9 and 10, the press described herein offers further advantages. The Applicant has surprisingly found that the gloss level of the primer/coating described in Example 10 can be varied substantially on-press by buffing the coating after curing with a polished stainless-steel roller driven in the opposite direction to the machine direction. The level of gloss achievable on the primer/coatings is broadly proportional to the rotational speed of this reverse driven roller and allows the press operator to precisely control the level of gloss to preset levels prior to the in-line printing.

This process supersedes and greatly simplifies the current method for producing gloss coated paper stocks.

### Example 14: Improvements to paper strength

A motorized vertical test stand (Wenzhau Sundoo Instrument Company) was equipped with upper and lower clamping jaw assemblies. The upper clamp assembly was attached to a suitable load cell. The lower clamp assembly was attached to the moveable motor driven variable speed cross arm, which was stabilized for vertical movement only. Uncoated and coated lightweight Bible paper stock were cut into test strips 25mm wide x 100 mm length and their tensile strength tested. At a relative humidity of 63% and 23°C it was found that the coated substrate exhibited a 14% increase in the tensile strength in the machine direction. The paper was Bollore Primapage New, a 34 g/m² lightweight paper and the coating of Example 8 was applied at a concentration of 2 g/m² (dry weight) on each side and UV cured.

## Claims

1. An aqueous, curable coating or inkjet ink composition comprising: at least one water-soluble tri-functional or tetra-functional monomer represented by Formula I: 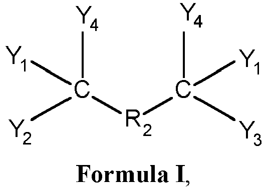 wherein,
R₂ is a direct bond; and
wherein each Y₁ is CH₂₌CR₁-C(=O)-X-,
wherein R₁ is H or C₁- to C₅- alkyl;
wherein X is independently selected from any one or more of the following:
-(CH₂)n-NH-(CH₂)n-, wherein each n is independently 0 to 5;
-O-(CH₂)ₙ-NH- wherein n = 1 to 5;
-O-(CH₂)ₙ-O-, wherein n = 1 to 8;
-NH-(CH₂)ₙ-O-R₃-, wherein n = 1 to 5,
wherein each Y₄ is H;
wherein Y₂ and Y₃ are each independently selected from Y₁ or OH, -NHC(=O)OR₄, OR₅, or NH₂,
wherein R₃ is -(CH₂)ₙ- wherein n = 0 to 5;
wherein R₄ is H or C₁₋₈ alkyl, and
wherein R₅ is C₁₋₈ alkyl,
wherein tri-functional refers to the monomer having three C=C moieties and tetra-functional refers the monomer having four C=C moieties.

2. The composition of claim 1, wherein
a) the monomer has a solubility of at least 40 g/L in water at 25 °C, and/or
b) the composition comprises between 5 to 90 wt% water-soluble monomer.

3. The composition of any one of the preceding claims, wherein the composition comprises a dye, a pigment, or a dye and a pigment.

4. The composition of any one of the preceding claims, wherein the composition comprises between 10 and 50 % by weight water.

5. The composition of any one of the preceding claims, wherein the composition is a coating composition, wherein
a) the composition preferably has a viscosity of between 200 and 600 Cp at room temperature (25°C), and/or
b) the composition preferably comprises between 5 and 20 wt% of the water-soluble monomer.

6. The composition of claim 5, wherein the coating composition comprises an organic hollow sphere polymeric pigment which is present in the composition preferably in an amount of between 10 and 25 wt% (g solids/100 g composition).

7. The composition of any one of claims 1 to 4, wherein the composition is an inkjet ink, wherein
a) the inkjet ink preferably has a viscosity of between 1 and 50 Cp at room temperature (25°C), and/or
b) the inkjet ink composition preferably comprises between 20 and 90 wt% of the water-soluble monomer.

8. Use of the composition according to any one of claims 1 to 6 as a coating, or use of the composition according to claim 7 as an inkjet ink.

9. A method for coating a substrate to prepare a printable surface, the method comprising the steps of:
applying the aqueous, curable coating composition according to any one of claims 1 to 6 onto a substrate; and curing the aqueous, curable coating composition to thereby provide said printable surface.

10. The method of claim 9, with the proviso that no initial heating step is required for removing some or all of the water in the composition, wherein
a) preferably the curing is complete or substantially complete at line speeds in the range 30 m/minute - 600 m/minute, and/or
b) the curing is preferably cured to dryness.

11. A method for producing a substrate having a coating thereon whereby the gloss level of said coating is controllable to a predetermined level, the process comprising the steps of:
applying a coating composition according to claim 6 onto said substrate;
polymerising said coating composition to produce a cured coating; and
buffing the surface of said cured coating sufficiently to achieve said predetermined gloss level, whereby said buffing step is preferably achieved by contacting the surface of said coating with a roller rotating in a first direction and moving the substrate with respect to the roller in the opposite direction to the first direction .

12. The method of any one of claims 9 or 10, wherein the substrate is a polymeric film, a three-dimensional plastic object, glass, metal or alloy, a natural or synthetic textile or fabric, or a cellulosic substrate.

13. The composition of claim 1, wherein the monomer is one or more selected from the group consisting of Formula X, Formula XI or Formula XII: 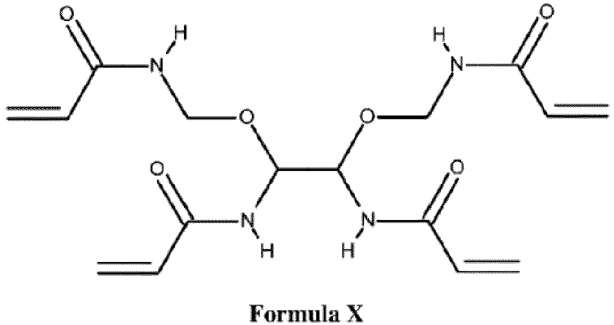 N-[[2,2-bis(prop-2-enoylamino)-1-[(prop-2-enoylamino)methoxy]ethoxy]methyl]prop-2-, enamide 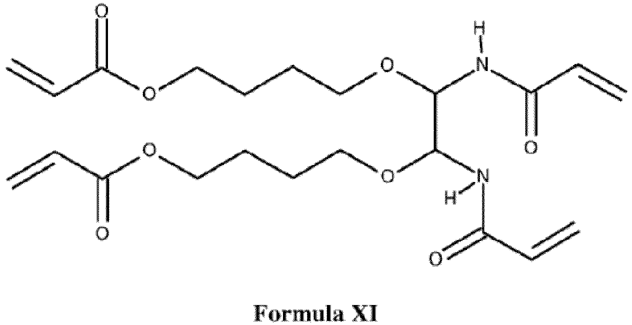 4-[1 ,2-bis(prop-2-enoylamino)-2-(4-prop-2-enoyloxybutoxy)ethoxy]butyl prop-2-enoate 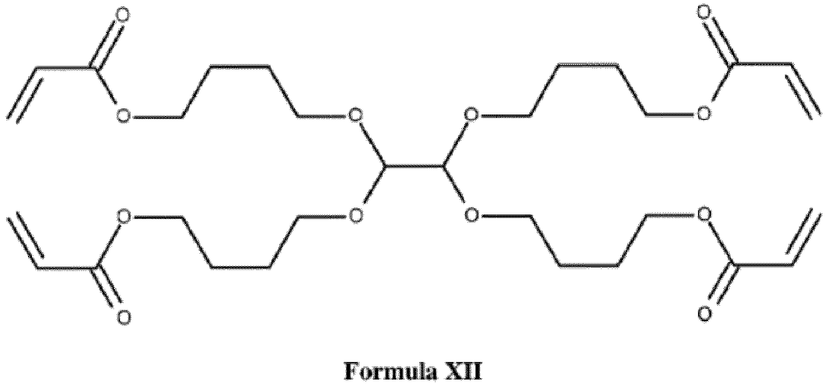 4-[1,2,2-tris(4-prop-2-enoyloxybutoxy)ethoxy]butyl prop-2-enoate

## Patentansprüche

1. Wässrige, härtbare Beschichtungs- oder Tintenstrahltintenzusammensetzung, umfassend: mindestens ein wasserlösliches trifunktionelles oder tetrafunktionelles Monomer, dargestellt durch Formel I: 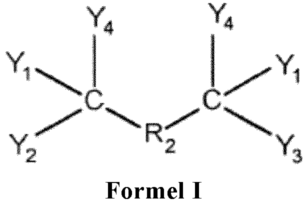 wobei
R₂ eine direkte Bindung ist; und
wobei jedes Y₁ CH₂₌CR₁-C(=O)-X- ist,
wobei R₁ H oder C₁- bis Cs-Alkyl ist;
wobei X unabhängig ausgewählt ist aus einem oder mehreren von dem Folgenden:
- (CH₂)n-NH-(CH₂)n-, wobei jedes n unabhängig 0 bis 5 ist;
- O-(CH₂)ₙ-NH-, wobei n = 1 bis 5;
- O-(CH₂)ₙ-O-, wobei n = 1 bis 8;
- NH-(CH₂)ₙ-O-R₃-, wobei n = 1 bis 5,
wobei jedes Y₄ H ist;
wobei Y₂ und Y₃ jeweils unabhängig voneinander ausgewählt sind aus Y₁ oder OH, -NHC-(=O)OR₄, OR₅ oder NH₂,
wobei R₃ -(CH₂)ₙ ist, wobei jedes n = 0 bis 5;
wobei R₄ H oder C₁₋₈-Alkyl ist, und
wobei R₅ C₁₋₈-Alkyl ist,
wobei sich "trifunktionell" auf das Monomer mit drei C=C-Einheiten bezieht und sich "tetrafunktionell" auf das Monomer mit vier C=C-Einheiten bezieht.

2. Zusammensetzung nach Anspruch 1, wobei
a) das Monomer eine Löslichkeit von mindestens 40 g/1 in Wasser bei 25 °C aufweist, und/oder
b) die Zusammensetzung zwischen 5 bis 90 Gew.-% wasserlösliches Monomer umfasst.

3. Zusammensetzung nach einem der vorangehenden Ansprüche, wobei die Zusammensetzung einen Farbstoff, ein Pigment oder einen Farbstoff und ein Pigment umfasst.

4. Zusammensetzung nach einem der vorangehenden Ansprüche, wobei die Zusammensetzung zwischen 10 und 50 Gew.-% Wasser umfasst.

5. Zusammensetzung nach einem der vorangehenden Ansprüche, wobei die Zusammensetzung eine Beschichtungszusammensetzung ist, wobei
a) die Zusammensetzung vorzugsweise eine Viskosität zwischen 200 und 600 Cp bei Raumtemperatur (25 °C) aufweist, und/oder
b) die Zusammensetzung vorzugsweise zwischen 5 und 20 Gew.-% des wasserlöslichen Monomers umfasst.

6. Zusammensetzung nach Anspruch 5, wobei die Beschichtungszusammensetzung ein organisches polymeres Hohlkugelpigment, das in der Zusammensetzung vorzugsweise in einer Menge zwischen 10 und 25 Gew.-% (g Feststoff/100 g Zusammensetzung) vorliegt, ist.

7. Zusammensetzung nach einem der Ansprüche 1 bis 4, wobei die Zusammensetzung eine Tintenstrahltinte ist,
wobei
a) die Tintenstrahltinte vorzugsweise eine Viskosität zwischen 1 und 50 Cp bei Raumtemperatur (25 °C) aufweist, und/oder
b) die Tintenstrahltintenzusammensetzung vorzugsweise zwischen 20 und 90 Gew.-% des wasserlöslichen Monomers umfasst.

8. Verwendung der Zusammensetzung nach einem der Ansprüche 1 bis 6 als Beschichtung, oder Verwendung der Zusammensetzung nach Anspruch 7 als Tintenstrahltinte.

9. Verfahren zur Beschichtung eines Substrates zum Herstellen einer bedruckbaren Oberfläche, wobei das Verfahren die folgenden Schritte umfasst:
Aufbringen der wässrigen, härtbaren Beschichtungszusammensetzung nach einem der Ansprüche 1 bis 6 auf ein Substrat; und Härten der wässrigen, härtbaren Beschichtungszusammensetzung, um dadurch die bedruckbare Oberfläche bereitzustellen.

10. Verfahren nach Anspruch 9, mit der Maßgabe, dass kein anfänglicher Erwärmungsschritt zur Entfernung von einigem oder sämtlichem Wasser in der Zusammensetzung erforderlich ist, wobei
a) das Härten bei Anlagengeschwindigkeiten im Bereich von 30 m/min bis 600 m/min vorzugsweise vollständig oder im Wesentlichen vollständig ist, und/oder
b) das Härten vorzugsweise bis zur Trockne gehärtet wird.

11. Verfahren zur Herstellung eines Substrates mit einer Beschichtung darauf, wobei der Glanzgrad der Beschichtung auf einen vorgegebenen Wert regulierbar ist, wobei das Verfahren die folgenden Schritte umfasst:
Aufbringen einer Beschichtungszusammensetzung nach Anspruch 6 auf das Substrat;
Polymerisieren der Beschichtungszusammensetzung, um eine gehärtete Beschichtung hervorzubringen; und
ausreichendes Polieren der Oberfläche der gehärteten Beschichtung, um den vorgegebenen Glanzgrad zu erzielen, wobei der Polierschritt vorzugsweise durch das Inkontaktbringen der Oberfläche der Beschichtung mit einer in eine erste Richtung rotierenden Walze und das Bewegen des Substrates bezüglich der Walze in die entgegengesetzte Richtung zu der ersten Richtung realisiert wird.

12. Verfahren nach einem der Ansprüche 9 oder 10, wobei das Substrat eine Polymerfolie, ein dreidimensionaler Kunststoffgegenstand, Glas, Metall oder Legierung, ein(e) natürliche(r) oder synthetische(r) Textilie oder Stoff oder ein Cellulosesubstrat ist.

13. Zusammensetzung nach Anspruch 1, wobei das Monomer eines oder mehrere, ausgewählt aus der Gruppe bestehend aus Formel X, Formel XI oder Formel XII, ist: 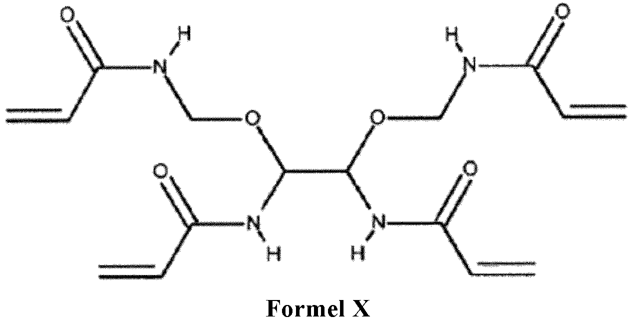 N-[[2,2-Bis(prop-2-enoylamino)-1-[(prop-2-enoylamino)methoxy]ethoxy]-methyl]prop-2-enamid, 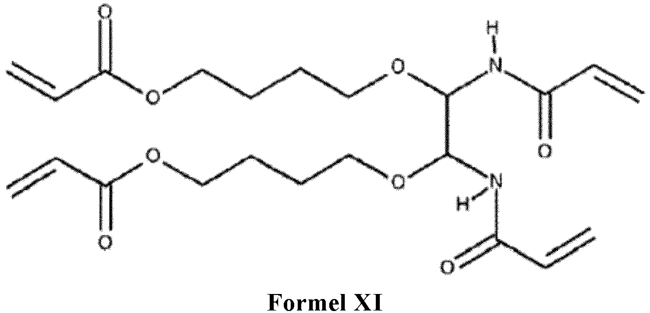 4-[1,2-Bis(prop-2-enoylamino)-2-(4-prop-2-enoyloxybutoxy)ethoxy]butylprop-2-enoat, 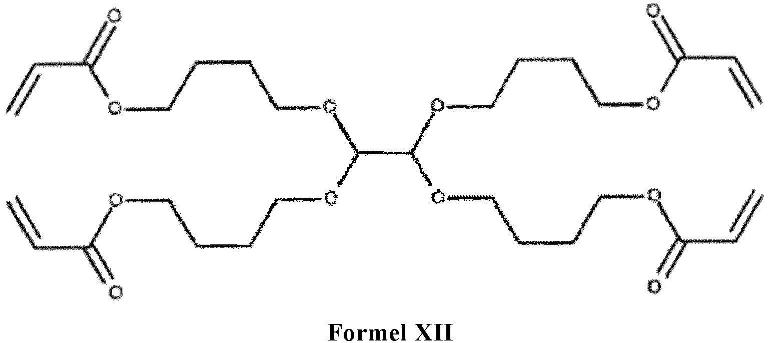 4-[1,2,2-Tris(4-prop-2-enoyloxybutoxy)ethoxy]butylprop-2-enoat.

## Revendications

1. - Composition aqueuse durcissable de revêtement ou d'encre pour jet d'encre, comprenant : au moins un monomère trifonctionnel ou tétrafonctionnel soluble dans l'eau, représenté par la Formule I : 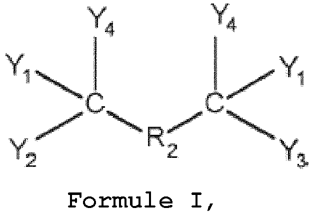 dans laquelle :
R₂ est une liaison directe ; et
dans laquelle chaque Y₁ est CH₂ = CR₁-C (=O)-X-,
dans laquelle R₁ est H ou alkyle en C₁ à C₅ ;
dans laquelle X est choisi indépendamment parmi l'un quelconque ou plusieurs de :
- (CH₂)n-NH-(CH₂)n-, où chaque n est indépendamment 0 à 5 ;
- O-(CH₂)ₙ-NH-, où n= 1 à 5,
- O-(CH₂)ₙ-O-, où n = 1 à 8 ;
- NH- (CH₂)ₙ-O-R₃-, où n = 1 à 5,
dans laquelle chaque Y₄ est H ;
dans laquelle Y₂ et Y₃ sont chacun indépendamment choisis parmi Y₁ ou OH, -NHC (=O) OR₄, OR₅ ou NH₂,
où R₃ est -(CH₂)n-, où n = 0 à 5 ;
où R₄ est H ou alkyle en C₁₋₈; et
où R₅ est alkyle en C₁₋₈,
où trifonctionnel se réfère au monomère ayant trois fractions C=C et tétrafonctionnel se réfère au monomère ayant quatre fractions C=C.

2. - Composition selon la revendication 1, dans laquelle
a) le monomère a une solubilité d'au moins 40 g/L dans l'eau à 25 °C, et/ou
b) la composition comprend entre 5 et 90 % en poids de monomère soluble dans l'eau.

3. - Composition selon l'une quelconque des revendications précédentes, dans laquelle la composition comprend un colorant, un pigment ou un colorant et un pigment.

4. - Composition selon l'une quelconque des revendications précédentes, dans laquelle la composition comprend entre 10 et 50 % en poids d'eau.

5. - Composition selon l'une quelconque des revendications précédentes, dans laquelle la composition est une composition de revêtement, dans laquelle
a) la composition a, de préférence, une viscosité d'entre 200 et 600 Cp à température ambiante (25°C), et/ou
b) la composition comprend, de préférence, entre 5 et 20 % en poids du monomère soluble dans l'eau.

6. - Composition selon la revendication 5, dans laquelle la composition de revêtement comprend un pigment polymère organique à sphères creuses, qui est présent dans la composition, de préférence, dans une quantité d'entre 10 et 25 % en poids (g de solides/100 g de composition).

7. - Composition selon l'une quelconque des revendications 1 à 4, dans laquelle la composition est une encre pour jet d'encre, dans laquelle
a) l'encre pour jet d'encre a, de préférence, une viscosité d'entre 1 et 150 Cp à température ambiante (25°C), et/ou
b) la composition d'encre pour jet d'encre comprend, de préférence, entre 20 et 90 % en poids du monomère soluble dans l'eau.

8. - Utilisation de la composition selon l'une quelconque des revendications 1 à 6 comme revêtement, ou utilisation de la composition selon la revendication 7 comme encre pour jet d'encre.

9. - Procédé pour revêtir un substrat afin de préparer une surface imprimable, le procédé comprenant les étapes consistant à :
appliquer la composition de revêtement aqueuse durcissable selon l'une quelconque des revendications 1 à 6 sur un substrat ; et faire durcir la composition de revêtement aqueuse durcissable pour fournir par là ladite surface imprimable.

10. - Procédé selon la revendication 9, à la condition qu'aucune étape initiale de chauffage ne soit nécessaire pour retirer une partie ou la totalité de l'eau dans la composition, dans lequel
a) de préférence, le durcissement est complet ou sensiblement complet à des vitesses linéaires dans la plage de 30 m/minute - 600 m/minute, et/ou
b) le durcissement est, de préférence, réalisé à siccité.

11. - Procédé de production d'un substrat sur lequel se trouve un revêtement, dans lequel le niveau de brillance dudit revêtement est apte à être contrôlé à un niveau prédéterminé, le procédé comprenant les étapes consistant à :
appliquer une composition de revêtement selon la revendication 6 sur ledit substrat ;
polymériser ladite composition de revêtement pour produire un revêtement durci ; et
polir la surface dudit revêtement durci suffisamment pour atteindre ledit niveau de brillance prédéterminé, ladite étape de polissage étant, de préférence, réalisée en mettant en contact la surface dudit revêtement avec un rouleau tournant dans une première direction et en déplaçant le substrat par rapport au rouleau dans la direction opposée à la première direction.

12. - Procédé selon l'une quelconque des revendications 9 ou 10, dans lequel le substrat est un film polymère, un objet plastique, verre, métal ou alliage tridimensionnel, un textile ou tissu naturel ou synthétique ou un substrat cellulosique.

13. - Composition selon la revendication 1, dans laquelle le monomère est un ou plusieurs choisis dans le groupe consistant en la Formule X, la Formule XI ou la Formule XII : 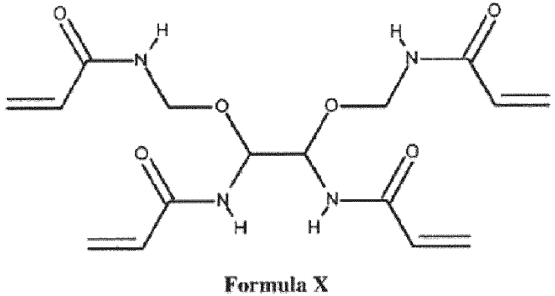 N-[[2,2-bis(prop-2-énoylamino)-1-[(prop-2-énoylamino)méthoxy]éthoxy]méthyl]prop-2-énamide 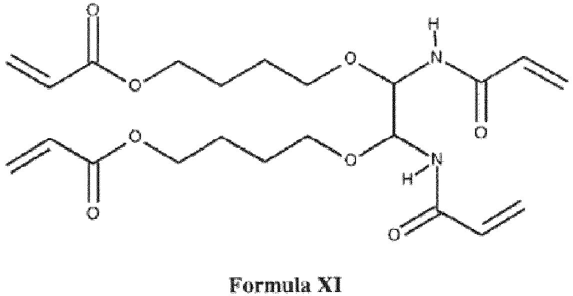 4-[1,2-bis(prop-2-énoylamino)-2-(4-prop-2-énoyloxybutoxy)éthoxy]butyl prop-2-énoate 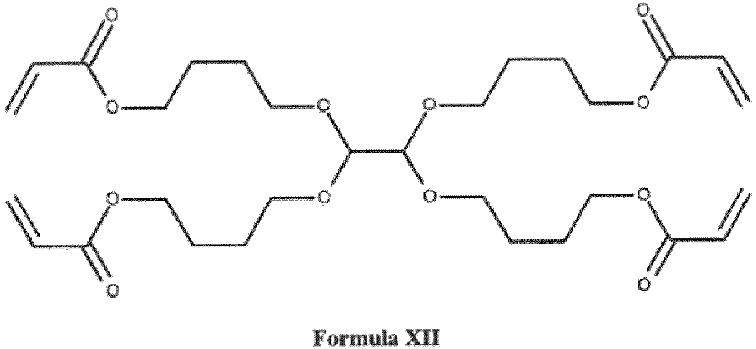 4-[1,2,2-tris(4-prop-2-énoyloxybutoxy)éthoxy]butyl prop-2-énoate
